# FASCICULE DE BREVET EUROPEEN

(11) **EP 1 112 488 B1**
(45) Date de publication et mention de la délivrance du brevet: **06.04.2005**
(21) Numéro de dépôt: 99941704.1
(22) Date de dépôt: 07.09.1999
(51) Int. Cl.: G01N 27/12

(54) **FILM DE DETECTION D'UNE ESPECE CHIMIQUE, CAPTEUR CHIMIQUE ET PROCEDE DE FABRICATION DE CEUX-CI**
SCHICHT ZUR FESTSTELLUNG EINES CHEMISCHEN STOFFS, CHEMISCHE PROBE UND ZUGEHÖRIGES HERSTELLUNGSVERFAHREN
FILM FOR DETECTING A CHEMICAL SPECIES, CHEMICAL SENSOR AND METHOD FOR MAKING SAME

(30) Priorité: 08.09.1998 FR 9811196
(43) Date de publication de la demande: 04.07.2001
(73) Titulaire: Commisariat à l'énergie Atomique, 75752 Paris 15ème (FR); Perez, Henry, 91080 Courcouronne (FR); Armand, Franck, 75015 Paris (FR); Pradeau, Jean-Paul, 91160 Longjumeau (FR)
(72) Inventeur: PEREZ, Henry, F-91080 Courcouronne (FR); ARMAND, Franck, F-75015 Paris (FR); PRADEAU, Jean-Paul, F-91160 Longjumeau (FR)
(74) Mandataire: Audier, Philippe André
(86) Numéro de dépôt international: PCT/FR1999/002121
(87) Numéro de publication internationale: WO 2000/014520

(56) Documents cités:
- WO-A-96/30750
- GB-A- 2 138 951
- US-A- 5 256 574
- WOHLTJEN H ET AL: "COLLOIDAL METAL-INSULATOR-METAL ENSEMBLE CHEMIRESISTOR SENSOR" ANALYTICAL CHEMISTRY, vol. 70, no. 14, 15 juillet 1998 (1998-07-15), pages 2856-2859, XP000778883
- M C LONERGAN: "ARRAY-BASED VAPOR SENSING USING CHEMICALLY SENSITIVE, CARBON BLACK -POLYMER RESISTORS" CHEMISTRY OF MATERIALS, no. 8, 1 janvier 1996 (1996-01-01), page 2298 2312 XP002078727

## Description

### Domaine technique de l'invention

La présente invention se rapporte à un film de détection d'une espèce chimique, à un capteur chimique comprenant un film selon l'invention, à un procédé de fabrication d'un capteur chimique comprenant un tel film, et à un procédé pour améliorer la stabilité dans le temps et la reproductibilité d'un signal électrique mesuré à partir du film de détection d'une espèce chimique selon l'invention.

Elle s'applique à tous les domaines dans lesquels la détection d'une espèce chimique est basée sur la variation d'une propriété électrique d'un matériau sensible sous l'effet de l'espèce chimique à détecter.

Parmi les dispositifs exploitant les propriétés électriques d'un matériau sensible tel qu'un film de détection d'une espèce chimique, on peut citer par exemple les capteurs chimiques conductimétriques, les composants électroniques de type transistor à effet de champ, et les électrodes de détection en milieu liquide.

Dans ces dispositifs, le film, c'est-à-dire le matériau actif, est sous la forme d'un film mince réalisé par exemple par la technique de Langmuir-Blodgett, par greffage covalent, par dépôt séquentiel de couches auto-assemblées, par chimisorption ou par toute technique classique de dépôt de films notamment de films minces.

Pour former un capteur chimique, ce film peut être par exemple disposé sur un substrat isolant muni d'électrodes métalliques minces, qui permettent de réaliser la mesure de conductivité du film,.

### Etat de la technique

Le domaine des capteurs chimiques conductimétriques s'est développé selon deux directions indépendantes suivant que l'élément sensible est constitué d'un matériau minéral ou métallique, typiquement d'un oxyde métallique, ou d'un matériau organique.

Le matériau minéral le plus utilisé, par exemple dans le cadre des capteurs de gaz, est l'oxyde d'étain SnO₂. Ce type de matériau a fait l'objet de nombreuses études depuis plus de trente années. Il présente les avantages de posséder une bonne stabilité chimique et thermique. En revanche, il possède une mauvaise sélectivité intrinsèque liée au fait que les processus de détection se passent aux joints de grains. La sélectivité est modulée par la nature des espèces chimiques présentes à la surface des grains et dont la concentration relative varie en fonction de la température. Par ce biais, une certaine sélectivité est donc observée en fonction de la température de fonctionnement du capteur. Des effets sur la sélectivité des dispositifs ont également été observés lorsque certains additifs tels que Pd, Pt, Ag sont incorporés au matériau ou lorsque des traitements chimiques, par exemple au SO₂, sont réalisés au cours de la réalisation du matériau. Les processus liés à la détection dans ce type de matériau sont dus à la modification de la barrière de potentiel existant entre grains voisins. Les mécanismes précis restent assez mal connus. Des effets catalytiques ou des phénomènes d'oxydo-réduction sont souvent invoqués.

En ce qui concerne les matériaux organiques, on trouve encore très peu de réalisations concrètes et parmi celles-ci les matériaux polymères sont exclusivement concernés. L'utilisation de la matière organique dans des dispositifs de mesure conductimétrique parait sévèrement limitée par des phénomènes d'instabilité dans le temps et aussi par la grande dispersion des caractéristiques électriques enregistrées sur une même série d'échantillons. Il s'agit tout d'abord de la persistance d'une dérive électrique certainement due à la nature des matériaux eux-mêmes. Par ailleurs, le système global présente des valeurs de résistance très élevées en raison de l'utilisation de matériaux purement organiques. Enfin, le fait même que le matériau soit à la fois responsable de la détection de l'espèce chimique et de la transduction du signal électrique correspondant limite considérablement la nature des molécules utilisables. En effet, seules les molécules conduisant à des matériaux conducteurs peuvent être employées et leur sensibilité se limite essentiellement aux polluants présentant des propriétés d'oxyde-réduction marquées.

Ainsi, et c'est là un des points négatifs que les matériaux organiques partagent avec les matériaux minéraux, il est difficile de réaliser des systèmes à la fois conducteurs et sélectifs du point de vue détection.

Le document Wohltjen H. et al. : "Colloidal Metal-Insulator-Metal Ensemble Chemiresistor Sensor" Analitycal Chemistry, vol. 70, n°14, 15 juillet 1998, pages 2856-2859 décrit un film de détection chimique constitué de nanoparticules minérales et de molécules organiques greffées sur lesdites nanoparticules de sorte qu'elles forment une couronne organique autour desdites nanoparticules. Ce film de détection n'est pas spécifique.

### Exposé de l'invention

La présente invention a précisément pour but de résoudre les problèmes de l'art antérieur et de fournir un film de détection d'une espèce chimique présentant notamment une grande stabilité dans le temps des mesures conductimétriques, une sélectivité de détection, une faible dispersion des caractéristiques électriques enregistrées sur une même série d'échantillons, ainsi qu'une faible dérive électrique, une résistance contrôlée et une grande sensibilité.

Le film selon l'invention est défini dans la revendication 1 et a des propriétés d'interaction avec l'espèce chimique à détecter et des propriétés électriques, et il est caractérisé en ce qu'il comprend des nanoparticules minérales, appelées aussi ci-après nanoparticules, et des molécules organiques.

Selon l'invention, les nanoparticules peuvent avoir pour rôle d'assurer essentiellement les propriétés électriques du film, et des molécules organiques peuvent avoir pour rôle d'assurer essentiellement les propriétés d'interaction du film avec l'espèce chimique à détecter.

Les molécules organiques qui ont pour rôle d'assurer essentiellement les propriétés d'interaction du film avec l'espèce chimique sont aussi appelées ci-après molécules organiques d'interaction.

Selon l'invention, des molécules organiques sont greffées sur lesdites nanoparticules de sorte qu'elles forment une couronne organique autour desdites nanoparticules, et des molécules organiques qui ont pour rôle d'assurer les propriétés d'interaction du film avec l'espèce chimique à détecter peuvent être mélangée avec les nanoparticules autour desquelles une couronne organique est formée, ou greffées sur les molécules organiques qui forment une couronne organique autour desdites nanoparticules.

Selon l'invention, les molécules organiques greffées sur lesdites nanoparticules sont des molécules organiques qui ont pour rôle essentiel de former une couronne organique autour des nanoparticules, ou des molécules organiques qui ont à la fois pour rôle de former une couronne organique autour des nanoparticules et de se lier avec les molécules organiques d'interaction avec l'espèce chimique à détecter, ces dernières étant appelées aussi ci-après molécules organiques bifonctionnelles, ou un mélange de celles-ci.

Les nanoparticules sont par exemple des nanoparticules comprenant au moins un membre choisi dans un ensemble comprenant du platine, de l'or, de l'argent, du CdS, TiO₂.

Les nanoparticules peuvent par exemple avoir une taille allant d'environ 1 à environ 100 nm de diamètre, ou encore d'environ 1 à environ 50 nm de diamètre, ou encore d'environ 1 à environ 10 nm de diamètre, cette taille pouvant être homogène ou hétérogène, de préférence homogène.

Les molécules organiques qui ont pour rôle d'assurer les propriétés d'interaction du film avec l'espèce chimique à détecter peuvent comprendre, ou être constituées, d'une molécule choisie dans un ensemble comprenant une phtalocyanine, une tétrapyridinophtalocyanine, un thiophène, un oligothiophène, une porphirine, une érythrosine, un éther couronne, un aza-éther couronne, un cryptophane, une cyclodextrine, un alkyl linéaire ou ramifié comprenant de 1 à 12 atomes de carbone, un benzène, un dérivé de ces molécules, substituée(s) ou non substituée(s) par une ou plusieurs fonction(s) chimique(s) d'interaction avec l'espèce chimique à détecter.

Les molécules organiques greffées sur lesdites nanoparticules sont des molécules organiques qui ont pour rôle essentiel de former une couronne organique autour des nanoparticules, c'est-à-dire qui n'ont pas pour rôle d'interagir avec l'espèce chimique à détecter. La fonction de ces molécules est décrite ci-dessous. Ces molécules organiques peuvent comprendre ou être constituées d'une molécule choisie dans un ensemble incluant par exemple un alkyl linéaire ou ramifié comprenant de 1 à 12 atomes de carbone, un aryl, substitués ou non substitués par une ou plusieurs fonction(s) chimique(s) de fixation sur lesdites nanoparticules. Ces fonctions chimiques de fixation sur lesdites nanoparticules sont décrites ci-dessous.

Les molécules organiques greffées sur lesdites nanoparticules peuvent aussi être des molécules bifonctionnelles qui possèdent d'une part, au moins une fonction chimique de fixation sur lesdites nanoparticules, et, d'autre part, au moins une fonction chimique de liaison avec les molécules organiques qui ont pour rôle d'assurer les propriétés d'interaction du film avec l'espèce chimique à détecter.

Il sera donc aisément compris par l'homme du métier que les molécules bifonctionnelles peuvent être des molécules organiques greffées sur les nanoparticules et sur lesquelles des molécules organiques d'interaction peuvent être greffées ou "surgreffé".

La, au moins une, fonction chimique de fixation sur lesdites nanoparticules est de préférence une fonction chimique permettant de former par exemple une liaison covalente ou une liaison-forte avec la nanoparticule minérale. Elle peut être choisie par exemple dans un ensemble comprenant un thiolate, un isônitrile, une amine, un trioctylphosphate et une pyridine.

La, au moins une, fonction chimique de liaison avec les molécules organiques d'interaction peut être choisie dans un ensemble comprenant une pyridine, une fonction amine, une fonction carboxylate, une fonction acide, une fonction alcool, une fonction aldéhyde, une fonction isocyanate, une fonction isothiocyanate, une fonction -COCl.

Selon l'invention, la, au moins une, fonction chimique d'interaction avec l'espèce chimique à détecter peut être choisie par exemple dans un ensemble comprenant une pyridine, une fonction amine, une fonction carboxylate, une fonction acide, une fonction alcool, une fonction aldéhyde, une fonction isocyanate, une fonction isothiocyanate, une fonction ester, une fonction -COCI.

Les molécules organiques bifonctionnelles peuvent comprendre, une molécule choisie dans un ensemble comprenant un thiophénol, un alkylthiol linéaire ou ramifié comprenant de 1 à 12 atomes de carbone, et un arylthiol.

Par exemple, le film selon l'invention peut être un film dans lequel les molécules organiques greffées sur lesdites nanoparticules peuvent être choisies dans un ensemble comprenant la 4-mercapto-aniline, la 4-mercapto-pyridine, le N-aminoalcane thiol et la mercapto-hydroxyalcane, ou un mélange de celles-ci.

Par exemple, le film selon l'invention peut être un film dans lequel les nanoparticules sont des nanoparticules de platine et les molécules organiques greffées sur lesdites nanoparticules de manière à former une couronne organique peuvent être celles précédemment citées.

Par exemple, dans le film selon l'invention, les nanoparticules peuvent être des nanoparticules de platine sur lesquelles sont greffées des molécules organiques de 4-mercapto-aniline.

Dans ce film, les molécules organiques ayant pour rôle d'assurer les propriétés d'interaction du film avec l'espèce chimique à détecter peuvent être par exemple des molécules de thiophène ou d'érythrosine, ces molécules pouvant être greffées sur les molécules de 4-mercapto-aniline, ou par exemple des molécules de tétrapyridinophtalocyanine, ces molécules pouvant être mélangées avec les nanoparticules sur lesquelles la 4-mercapto-aniline est greffée.

La tétrapyridinophtalocyanine peut être par exemple la tétra(hexyloxycarbonyl)phtalocyanine de cuivre, le bromure de tétraoctadécyl tétrapyridinium[3,4-b:3',4'-g:3",4"-1:3''',4'''-q] porphyrazine de cuivre ; la tétraoctyltétraamidophtalocyanine de cobalt.

Comme il est décrit précédemment, dans le film selon l'invention, les nanoparticules minérales définissent essentiellement les caractéristiques électriques du film. Elles ont notamment pour rôle de générer les porteurs de charges qui vont parcourir le film de détection, par exemple entre deux électrodes d'un capteur chimique, et assurent en quelque sorte le rôle d'électrodes de relais à travers les molécules organiques du film. De ce fait, par exemple lorsque le film selon l'invention est utilisé dans un capteur chimique comprenant un substrat et des électrodes, du fait de la présence des nanoparticules, la résistance de contact entre le film et les électrodes permettant d'assurer la récupération du signal électrique est considérablement diminuée par rapport à un film purement organique de l'art antérieur. Par ailleurs, le film selon l'invention est caractérisé par une meilleure stabilité électrique dans le temps que celle d'un film purement organique de l'art antérieur. En effet, la conduction dans le film étant assurée pour l'essentiel par les nanoparticules, les molécules organiques sont moins sollicitées pour la conduction électrique que dans un film purement organique.

Dans le film selon l'invention, ce sont des molécules organiques qui ont essentiellement pour rôle d'assurer les propriétés d'interaction du film avec l'espèce chimique à détecter : c'est l'interaction des molécules organiques d'interaction avec l'espèce chimique à détecter qui modifie la conduction électrique du film qui est assurée essentiellement par les nanoparticules, ce qui entraîne une modification de la résistance, ou conduction, du film.

En effet, dans le film selon l'invention, la partie minérale joue le rôle de transducteur puisque c'est elle qui fournit les porteurs de charge assurant la conductivité. Au sein du film, ces porteurs passent d'une nanoparticule à une autre en traversant la partie organique. C'est à ce niveau que se fait l'interface entre la détection et la transduction. Les porteurs franchiraient la barrière organique constituée par les molécules organiques par effet tunnel ou selon un processus de conduction par saut. Dans les deux cas, une barrière d'énergie doit être franchie. En l'absence d'espèce chimique à détecter, la valeur de cette barrière d'énergie et de ses caractéristiques physiques posséderait une valeur déterminant la conductivité du film. Lorsqu'une espèce chimique capable d'interagir avec les molécules organiques d'interaction est présente dans le milieu environnant le film, les caractéristiques de cette barrière d'énergie que les porteurs ont à franchir se trouveraient modifiées et de ce fait, la conductivité du matériau se trouverai elle aussi modifiée.

Une mise en évidence de la modification de la conductivité du film permet de mettre en évidence une interaction de l'espèce chimique à détecter avec les molécules organiques d'interaction du film, et donc de détecter ladite espèce chimique.

La présente invention fournit donc un film comprenant des nanoparticules minérales et des molécules organiques dans lequel les propriétés électriques du film et les propriétés d'interaction avec l'espèce chimique à détecter sont essentiellement séparées.

Selon l'invention, les propriétés d'interaction du film avec l'espèce chimique à détecter peuvent être le résultat d'une ou de plusieurs interactions des molécules organiques d'interaction en entier, ou seulement d'une partie de celles-ci, avec l'espèce chimique à détecter.

Par ailleurs, selon l'invention, l'interaction, ou les interactions, des molécules organiques d'interaction avec l'espèce chimique à détecter peut être, ou peuvent être, le résultat d'un ou de plusieurs type(s) d'interaction(s), de préférence réversibles, telle(s) que par exemple une liaison hydrogène, une liaison ionique, une interaction de Van der Waals, une interaction électrostatique ou dipolaire, ou plusieurs de ces interactions.

Un des avantages à utiliser des molécules organiques ayant une liaison ou interaction réversible avec l'espèce chimique à détecter est que le film peut se, ou être, régénéré(er) facilement pour servir à une nouvelle détection de l'espèce chimique. Si la liaison est peu réversible ou irréversible, un traitement chimique ou physique peut être nécessaire pour régénérer le film.

Selon l'invention, cette interaction peut être plus ou moins spécifique de l'espèce chimique à détecter, et il est de ce fait aisé de comprendre que la sélectivité de détection du film selon l'invention est pour une grande partie fonction de la spécificité d'interaction des molécules organiques d'interaction qu'il comprend avec l'espèce chimique à détecter.

Par exemple, un film selon l'invention comprenant des molécules organiques d'interaction très spécifiques d'une espèce chimique déterminée est très spécifique de ladite espèce chimique déterminée, et un film selon l'invention comprenant des molécules organiques d'interaction spécifique d'une famille d'espèces chimiques est spécifique de ladite famille, etc....

De ce fait, selon la nature notamment des molécules organiques d'interaction, qui peut être modifiée de façon très diversifiée, il est possible d'orienter fortement la sélectivité de détection d'un capteur ou d'une électrode comportant le film selon l'invention. Ainsi, alors que les matériaux purement organiques de l'art antérieur se montrent essentiellement sensibles à des espèces chimiques possédant des propriétés d'oxydo-réduction marquées, l'espèce chimique détectée modifiant dans ce cas directement la conductivité propre du matériau organique, le film de la présente invention, qui présente une structure hybride, peut être sensible à des espèces chimiques ne possédant pas de propriétés d'oxydo-réduction particulières.

L'invention se place donc de manière originale par rapport à l'art antérieur, notamment parce qu'elle fournit un film hybride qui permet de détecter de manière très spécifique des espèces chimiques extrêmement variées par un choix judicieux des molécules organiques d'interaction avec l'espèce chimique à détecter.

Un film selon l'invention constitué d'un simple mélange des nanoparticules avec les molécules organiques, et notamment les molécules organiques d'interaction, peut conduire à une répartition imparfaitement contrôlée de ces deux espèces et donc à une mauvaise conduction électrique dans le film. Les dimensions des domaines organiques et minéraux peuvent donc être rédhibitoires pour une bonne détection de l'espèce chimique par le film. Afin que les porteurs de charges générés par les nanoparticules et assurant la conduction, soient "vus" par les molécules organiques, et en particulier par les molécules organiques d'interaction, et que la conduction électrique dans le film soit suffisante et stable, il peut être important que le mélange nanoparticules/molécules organiques soit le plus homogène possible, même à de très faibles dimensions.

Aussi, afin d'éviter par exemple une percolation des nanoparticules minérales, ou "phase minérale" il est judicieux de choisir un rapport nanoparticules/molécules organiques permettant d'éviter cette percolation. Ce phénomène de percolation peut en effet empêcher les molécules organiques d'interaction de jouer entièrement leur rôle dans le film.

De plus, en contrôlant la structure du film, c'est-à-dire l'alternance des parties organiques et des parties minérales, la détection de l'espèce chimique par le film peut être optimisée.

Aussi, dans le film selon l'invention, de préférence, les nanoparticules alternent avec les molécules organiques de manière à former un mélange homogène à l'échelle du nanomètre.

Ainsi, selon un premier mode de réalisation de la présente invention, des molécules organiques sont greffées sur lesdites nanoparticules de sorte qu'elles forment une couronne organique autour desdites nanoparticules et les molécules organiques d'interaction peuvent être mélangées avec les nanoparticules sur lesquelles une couronne organique est formée.

Selon un deuxième mode de réalisation de la présente invention les molécules organiques ayant pour fonction d'assurer les propriétés d'interaction du film avec l'espèce chimique à détecter peuvent être greffées sur des molécules organiques qui forment une couronne organique autour desdites nanoparticules.

Ces modes de réalisation de la présente invention permettent, de limiter l'agrégation des nanoparticules d'assurer et d'assurer et même de contrôler l'alternance homogène des domaines organiques et minéraux à une échelle pouvant même être de l'ordre du nanomètre.

Il se dégagé donc plusieurs stratégies d'utilisation de la présente invention.

Dans une première stratégie d'utilisation, qui correspond au premier mode de réalisation de la présente invention, les nanoparticules sont entourées de molécules organiques ayant essentiellement pour rôle de former une couronne organique autour de celles-ci. Ces molécules organiques sont greffées sur les nanoparticules de préférence par liaison covalente. Le greffage peut être réalisé par une quelconque réaction chimique connue de l'homme du métier pour greffer une molécule organique sur un métal ou un minéral, par exemple en utilisant des particules présynthétisées couvertes d'une molécule labile qui sera ensuite remplacée par la molécule organique à greffer, ou en synthétisant les particules minérales par réduction d'un sel correspondant en présence de la molécule organique à greffer, la molécule organique à greffer présentant une fonction chimique de fixation telle que celles précitées.

Dans cette stratégie, les molécules organiques d'interaction avec l'espèce chimique à détecter sont mélangées avec les nanoparticules entourées de cette couronne organique, de manière à obtenir une homogénéité à la plus petite échelle possible, de préférence de l'ordre du nanomètre.

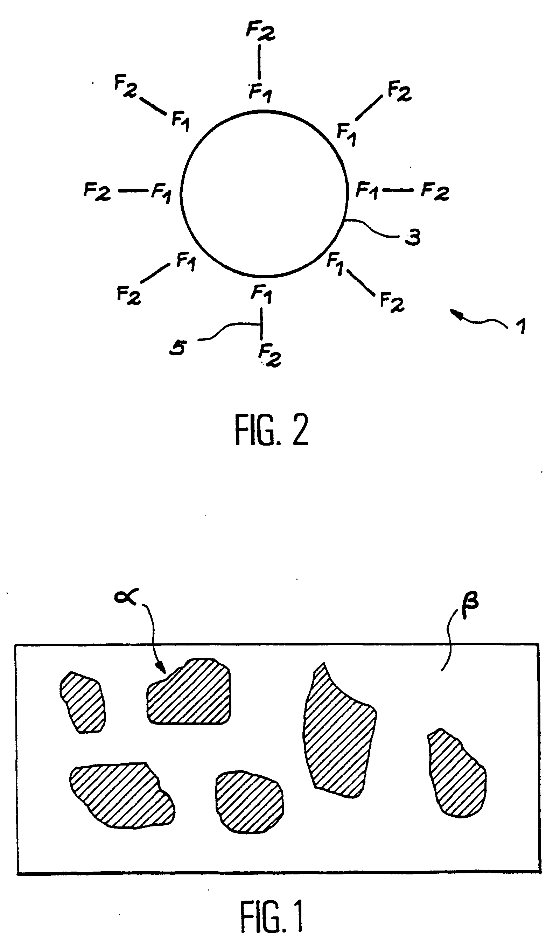

Cette première stratégie selon l'invention permet d'éviter l'agrégation des nanoparticules, mais elle ne permet pas toujours d'assurer une alternance homogène des nanoparticules entourées de leur couronne organique et des molécules organiques d'interaction dans le film. La figure 1 en annexe illustre schématiquement une simple juxtaposition de nanoparticules, référencées α, assurant la transduction et de molécules organiques, référencées β, dans un film selon l'invention.

Selon une deuxième stratégie, correspondant au deuxième mode de réalisation précité de la présente invention, les molécules organiques d'interaction sont greffées sur des molécules organiques qui forment une couronne organique autour des nanoparticules.

Dans ce cas, les molécules organiques formant une couronne organique autour des nanoparticules sont des molécules organiques bifonctionnelles telles que celles précitées : elles possèdent donc d'une part, une (ou plusieurs) fonction(s) chimique(s) de fixation par liaison covalente avec les nanoparticules, et, d'autre part, une (ou plusieurs) fonction(s) chimique(s) de liaison avec les molécules organiques d'interaction. Selon cette deuxième stratégie, les molécules organiques bifonctionnelles peuvent être greffées sur les nanoparticules minérales par une quelconque réaction chimique connue de l'homme du métier et destinée à greffer une molécule organique qui présente une fonction chimique de fixation telle que celles précitées sur un métal et/ou un minéral par exemple en utilisant des particules présynthétisées couvertes d'une molécule labile qui sera ensuite remplacée par la molécule organique à greffer, ou en synthétisant les particules minérales par réduction d'un sel correspondant en présence de la molécule organique à greffer, la molécule organique à greffer présentant une fonction chimique de fixation telle que celles précitées.

Les nanoparticules sur lesquelles sont greffées les molécules organiques bifonctionnelles sont également appelées, ci-après, nanoparticules fonctionnalisées.

Les molécules organiques bifonctionnelles greffées possèdent donc une fonction chimique "libre" de liaison avec les molécules organiques d'interaction.

Les molécules organiques d'interaction peuvent être greffées, ou "sur-greffées", sur les molécules organiques bifonctionnelles précitées par des réactions chimiques simples et classiques utilisées en chimie organique pour lier deux molécules organiques possédant des fonctions chimiques telles que celles précitées.

Selon l'invention, un film de nanoparticules fonctionnalisées peut donc être "pré-fabriqué", et suivant l'espèce chimique à détecter, une molécule organique adéquat, par exemple telle que celles précitées, peut être greffée sur les molécules organiques bifonctionnelles du film "pré-fabriqué".

L'équation (I) suivante schématise une réaction chimique de sur-greffage d'une molécule organique d'interaction sur une nanoparticule de platine fonctionnalisée. En particulier, cette équation schématise le greffage d'une molécule de thiophène possédant une fonction chlorure d'acide sur une fonction chimique libre -NH₂ d'une molécule organique bifonctionnelle de 4-mercapto-aniline greffée sur une nanoparticule de platine :

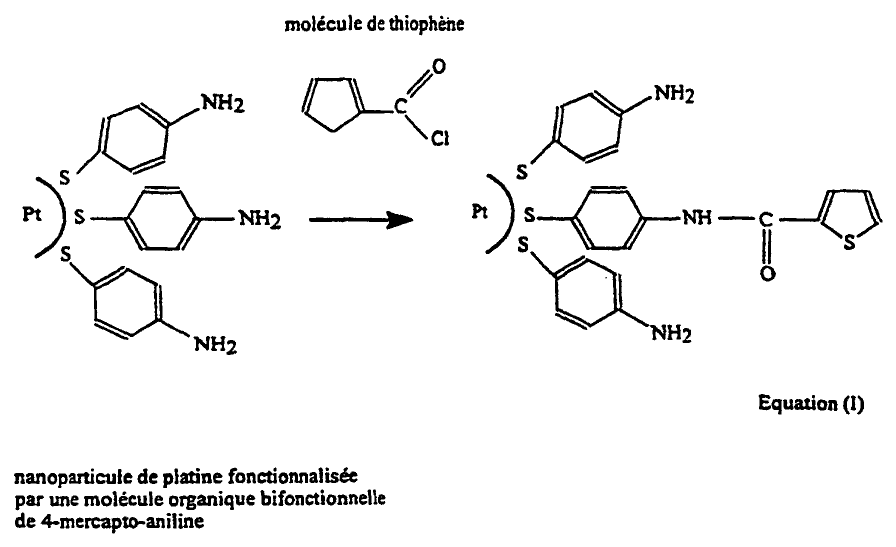

La figure 2 en annexe est une illustration schématique d'une nanoparticule fonctionnalisée référencée 1. Elle comprend une nanoparticule référencée 3 minérale sur laquelle sont greffées des molécules organiques bifonctionnelles référencées 5 qui forment une couronne organique par exemple selon les deux précédentes stratégies de la présente invention.

Sur cette figure, F1 est une fonction chimique de la molécule organique bifonctionnelle telle que celles précitées par laquelle la molécule organique est fixée sur la nanoparticule, et F2 est une fonction chimique de liaison avec les molécules organiques d'interaction avec l'espèce chimique à détecter telles que celles précitées, F1-F2 étant la molécule bifonctionnelle.

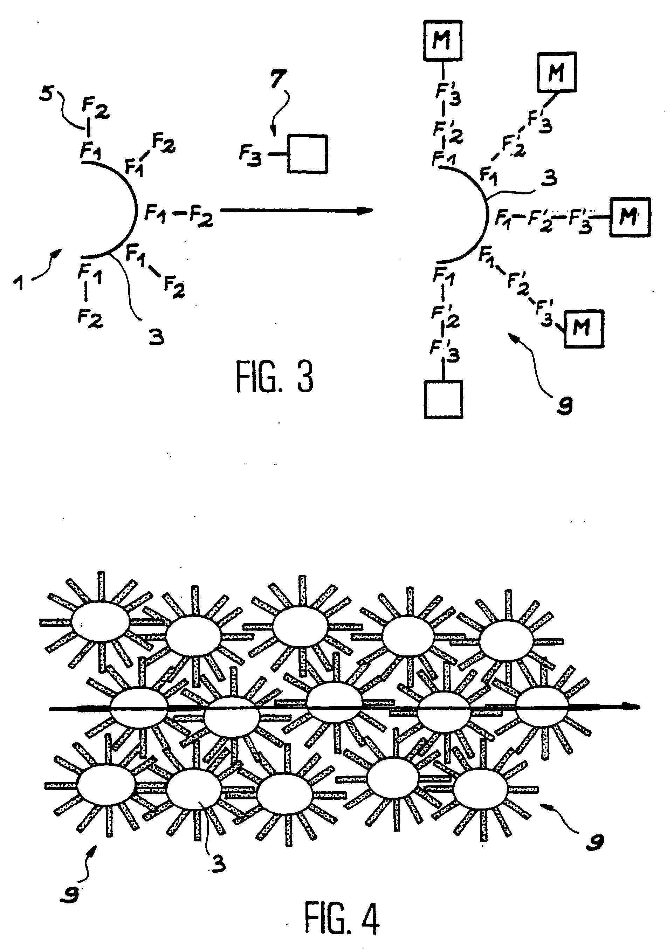

La figure 3 en annexe est une illustration d'une réaction chimique de sur-greffage d'une molécule organique référencée 7 ayant pour fonction d'assurer les propriétés d'interaction avec l'espèce chimique à détecter sur des molécules organiques bifonctionnelles référencées 5 qui forment une couronne organique autour des nanoparticules référencées 3 selon l'invention. La nanoparticule 3 comportant la couronne organique F1-F2 est celle représentée sur la figure 2, le sur-greffage étant réalisé grâce à la fonction F2 qui est dans ce cas une fonction de liaison avec les molécules organiques 7 d'interaction. Sur cette figure, F3-M représente une molécule organique d'interaction, F3 étant une fonction de liaison avec la fonction chimique F2, et M étant la fonction chimique d'interaction avec l'espèce chimique à détecter. Une particule fonctionnalisée référencée 9 est obtenue.

La figure 4 en annexe est un schéma illustrant l'alternance des nanoparticules et des molécules organiques à l'échelle du nanomètre dans un film selon l'invention. Le film selon l'invention peut en effet être considéré comme étant un film réalisé à partir de briques élémentaires qui sont par exemples les nanoparticules fonctionnalisées 9 schématisées sur la figure 3. La flèche qui traverse les nanoparticules fonctionnalisées 9 indique un trajet possible des porteurs de charge dans le film. L'utilisation selon l'invention de nanoparticules fonctionnalisées, permet d'assurer une homogénéité contrôlée d'alternance entre les molécules organiques d'interaction et les nanoparticules minérales à la plus petite échelle possible, celle du nanomètre.

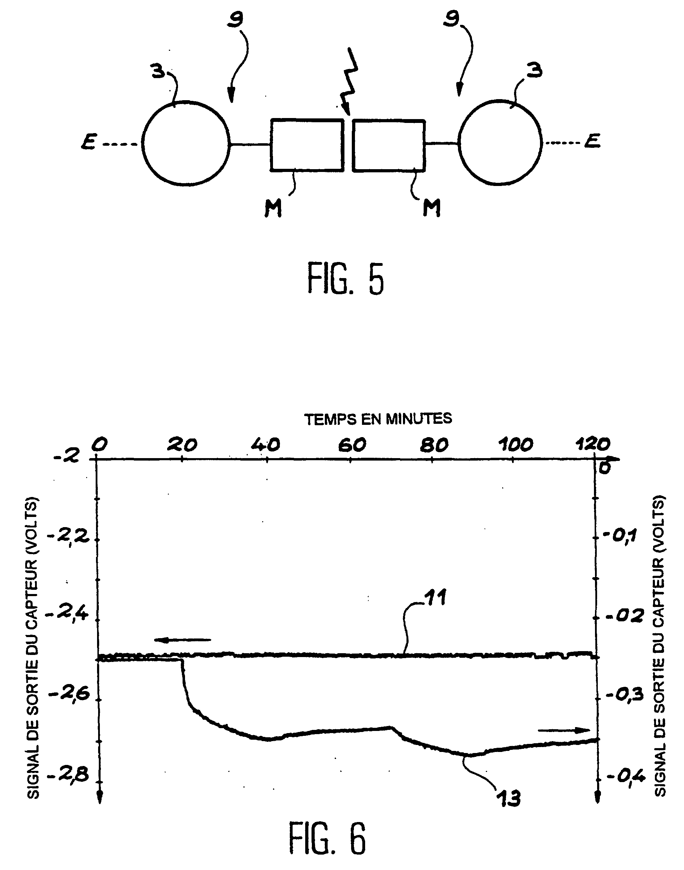

La figure 5 est un schéma illustrant la séparation des propriétés électriques du film de la présente invention assurées par des nanoparticules minérales et des propriétés d'interaction du film avec l'espèce chimique à détecter assurées par des molécules organiques.

Sur cette figure, la référence 3 se rapporte à une nanoparticule minérale et/ou organique, la référence 9 se rapporte à une nanoparticule fonctionnalisée, la référence M à une fonction chimique d'interaction avec une espèce chimique à détecter, et la flèche en zig-zag représente schématiquement l'interaction de cette fonction chimique avec ladite espèce chimique à détecter. Cette interaction entraîne une modification de la conduction du film assurée essentiellement par les nanoparticules. Cette modification est mesurée par une mesure de la résistance du film entre deux électrodes référencées E sur cette figure.

Le film selon l'invention présente, du fait de sa composition et de sa structure originales de nombreux avantages par rapport à un film de l'art antérieur qui sont notamment :
- une amélioration de la stabilité dans le temps et de la reproductibilité du signal électrique mesuré grâce à l'utilisation d'un matériau partiellement minéral,
- une augmentation de la conductivité du matériau grâce à la présence de la partie minérale,
- une conservation de la sensibilité de détection et de la sélectivité potentielle propre aux matériaux organiques grâce à la présence de molécules organiques dans la structure,
- une séparation des fonctions de détection et de transduction, fonctions inhérentes à tout capteur chimique par l'utilisation de particules minérales responsables de la transduction et de molécules organiques responsables de la détection,
- une amélioration de la fiabilité de la réponse d'un capteur comprenant un film selon l'invention vis-à-vis d'une espèce chimique à détecter.

Le film selon l'invention est de préférence un film mince, il peut être préparé par l'une quelconque des techniques connues de l'homme du métier pour fabriquer un tel film, par exemple par la technique de Langmuir-Blodgett, par greffage covalent, par dépôt séquentiel de couches auto-assemblées, par dépôt à la tournette, par dépôt par immersion, par chimisorption ou par toute autre technique, par exemple à partir d'une solution comprenant des nanoparticules greffées par des molécules organiques selon l'invention.

L'homme du métier comprendra aisément que le film doit avoir une épaisseur adaptée à l'utilisation qui en est faite.

Ce film peut être par exemple déposé sur un substrat isolant muni d'électrodes métalliques minces qui permettent de mesurer sa conductivité, pour former un capteur chimique.

Aussi, l'invention se rapporte également à un procédé selon la revendication 1b, de fabrication d'un capteur chimique comprenant un substrat isolant, un film de détection d'une espèce chimique, et au moins une électrode de métal, ledit procédé comprenant une étape de fabrication d'un film selon l'invention, une étape de dépôt de ce film sur le substrat isolant, et une étape de dépôt d'au moins une électrode de métal, entre le substrat et le film, ou sur le film déposé sur le substrat.

On va décrire également un procédé pour améliorer la stabilité dans le temps et la reproductibilité d'un signal électrique mesuré à partir d'un film de détection d'une espèce chimique déposé sur un substrat isolant muni sur certaines zones de sa surface d'électrodes métalliques, caractérisé en ce qu'il comprend une étape de fabrication d'un film selon l'invention de manière à ce que les propriétés électriques du film qui sont assurées essentiellement par les nanoparticules minérales soient séparées des propriétés d'interaction du film avec l'espèce chimique à détecter qui sont assurées essentiellement par des molécules organiques, une étape de dépôt sur le substrat isolant dudit film, et une étape de dépôt d'au moins une électrode de métal entre le substrat et le film, ou sur le film déposé sur le substrat.

Dans les procédés précités, de préférence, les électrodes sont déposées sous le film, c'est-à-dire sur le substrat isolant avant dépôt du film.

Les procédés précités peuvent comprendre en outre une étape qui consiste à réaliser à l'interface entre le substrat isolant et le film selon l'invention et/ou à l'interface entre les électrodes et le film selon l'invention au moins une couche monomoléculaire intercalaire constituée de molécules organiques liées de façon covalente au substrat ou aux électrodes, lesdites molécules comportant un groupe organique capable d'améliorer les propriétés de contact mécanique et/ou électrique entre le film de la présente invention et les électrodes métalliques et/ou entre le film de la présente invention et le substrat.

La couche intercalaire qui peut être disposée entre le substrat et le film de la présente invention permet de contrôler la nature et la qualité de l'interface réalisée entre le substrat et le film, et entre les électrodes et le film. Selon l'invention, par la mise en place de cette couche intercalaire liée de façon covalente au substrat et aux électrodes, on peut rendre les surfaces du substrat et des électrodes identiques du point de vue de leur propriétés physico-chimiques grâce à la présence des groupes organiques capables d'améliorer le contact avec le film de la présente invention. Cette couche intercalaire permet ainsi d'assurer un dépôt plus homogène du film de la présente invention sur toute la surface du substrat. Plus précisément, si les deux surfaces sont identiques d'un point de vue physico-chimique, on réduit de façon notable les discontinuités du matériau actif dans les zones où l'on passe du substrat aux électrodes. Si dans le cas de matériaux réalisés par dépôt à la tournette ou par la technique Langmuir-Blodgett ceci est de l'ordre de l'amélioration, ce point devient central lorsqu'il s'agit de réaliser des matériaux par greffage ou auto-assemblage.

La présence de cette couche intercalaire permet aussi d'améliorer la qualité du contact mécanique entre le substrat et les électrodes, d'une part, et le film de la présente invention, d'autre part.

En effet, les différences de coefficients de dilatation entre le substrat minéral et le film de la présente invention peuvent être en partie à l'origine des difficultés qui pourraient être rencontrées pour réaliser une mesure électrique fiable.

Enfin, la présence de cette couche permet d'améliorer la qualité du contact électrique entre le substrat et le film de la présente invention.

Cette couche peut être formée de molécules identiques ou comporter des molécules différentes. Lorsqu'elle est constituée de molécules différentes, celles-ci sont généralement de deux types et disposées de la façon suivante :

Les premières molécules sont situées à l'interface entre le substrat et le film de la présente invention et les secondes sont situées à l'interface entre les électrodes métalliques et le film de la présente invention.

Cette disposition permet de tenir compte de la nature différente du substrat isolant et des électrodes métalliques pour établir des liaisons covalentes entre le substrat et les premières molécules et entre les électrodes et les secondes molécules.

Généralement, le substrat isolant est en un matériau comportant de la silice, par exemple en silice pure, en silice fondue, en quartz ou en verre, et les premières molécules sont liées au substrat par l'intermédiaire d'atomes de silicium. Dans ce cas, les premières molécules peuvent être des dérivés de silane ou de siloxane qui ont la propriété de pouvoir se fixer par une liaison covalente de type siloxane sur le substrat.

Généralement, les électrodes métalliques sont en métal noble, par exemple en or, en platine, ou en alliage à base d'or ou de platine, et une liaison covalente peut être établie entre les secondes molécules et les électrodes par exemple, par l'intermédiaire d'atomes de soufre ou d'azote.

Avantageusement, les premières molécules répondent à l'une des formules suivantes : 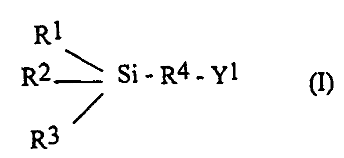 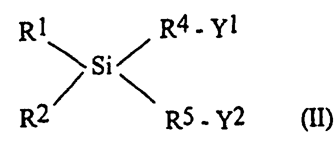 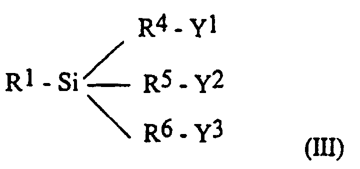 dans lesquelles :
- R¹ représente un atome d'halogène ou un groupe alcoxy en C₁ à C₄,
- R² et R³ représentent indépendamment un atome d'halogène, un groupe alcoxy en C₁ à C₄ ou un groupe alkyle en C₁ à C₄ ;
- R⁴, R⁵ et R⁶ représentent indépendamment une simple liaison ou des groupes espaceurs hydrocarbonés linéaires, aliphatiques ou aromatiques, pouvant contenir des hétéroatomes choisis parmi O, S et N et/ou des substituants choisis parmi les groupes amide, amine, ester et urée : et
- Y1, Y2 et Y3 représentent indépendamment un atome d'hydrogène ou un groupe organique choisi parmi CH₃, CH=CH₂, CN, NCO, NCS, OH, SH, NH₂, COOH, CONH₂, COCl, et les groupes phényle, triazole, imidazole et pyridyle.

Dans ces formules, les groupes alkyle ou alcoxy utilisés ont de préférence 1 ou 2 atomes de carbone.

Dans ces formules, le groupe R¹ et éventuellement les groupes R² et R³ sont des groupes partants qui permettent l'accrochage du silicium sur le substrat. Les groupes Y1, Y2 et Y3 sont des groupes qui améliorent les propriétés de contact ou permettent d'autres réactions.

Parmi les groupes Y mentionnés, on trouve des groupes hydrophobes (CH₃, CH=CH₂, phényle), des groupes hydrophiles (COOH, OH, NH₂ et SH) et des groupes capables de réagir avec le film de la présente invention, par exemple par complexation dans le cas d'un groupe pyridyle ou triazole, ou par réaction de condensation dans le cas d'un groupe NH₂ ou COOH.

Le choix des groupes Y1, Y2 et Y3 dépend en particulier de la technique utilisée ultérieurement pour le dépôt du film selon l'invention. Pour la technique de Langmuir-Blodgett, c'est essentiellement le caractère hydrophile (Y=OH, SH, NH₂, ...) ou hydrophobe (Y=CH₃, CH=CH₂, phényle,...) qui intervient. Pour le greffage covalent et la technique d'auto-assemblage, la nature de Y dépendra du type de réaction envisagée. Par exemple, pour une réaction de condensation avec un acide carboxylique Y sera une amine ; pour une complexation sur un métal Y pourra être une pyridine ou un triazole.

Lorsque R¹, R² et R³ représentent un atome de chlore et que l'on veut introduire dans les premières molécules de formule I, II ou III, un groupe hydrophile, il est préférable d'utiliser au départ une première molécule dans laquelle Y1 représente CH=CH₂, puis de modifier chimiquement les molécules par réaction du groupe allyle avec un réactif capable d'introduire en bout de chaîne un groupe hydrophile COOH, OH, SH ou NH₂. Des réactions de ce type peuvent être effectuées par les techniques décrites dans Wasserman et al, Langmuir, 1989, 5, pages 1074-1087.

Les secondes molécules qui sont adaptées à être fixées sur les électrodes métalliques en métal noble, sont généralement des molécules de thiol, de bisulfure ou d'amine répondant aux formules suivantes :

R⁹R¹⁰-Y' 1 (IV) et Y'2-R¹⁰-S-S-R¹¹-Y' 3 (V)

dans lesquelles :
- R⁹ représente SH ou NH₂,
- R¹⁰ et R¹¹ représentent indépendamment une simple liaison ou des groupes espaceurs hydrocarbonés linéaires, aliphatiques ou aromatiques, pouvant contenir des hétéroatomes choisis parmi O, S et N et/ou des substituants choisis parmi les groupes amide, amine, ester et urée ; et
- Y'1, Y'2 et Y'3 représentent indépendamment un atome d'hydrogène ou un groupe organique choisi parmi CH₃, CH=CH₂, CN, NCO, NCS, OH, SH, NH₂, COOH, CONH₂, COCl, et les groupes phényle, triazole imidazole et pyridyle.

Dans ce cas, l'accrochage des molécules sur les électrodes se fait par l'intermédiaire de liaisons S-métal ou N-métal.

Le choix des molécules répondant aux formules (IV) et (V) utilisées dépend également de la technique qui sera utilisée ultérieurement pour le dépôt du film de la présente invention. Ainsi, si ce matériau est déposé par la technique de Langmuir-Blodgett, le(s) groupe(s) Y' seront choisis pour être hydrophiles ou hydrophobes.

Dans le cas où le film de la présente invention est déposé par greffage covalent ou par la technique d'auto-assemblage, la nature des groupes Y' dépendra du type de réaction envisagée. Ainsi, si l'on veut effectuer une réaction de condensation entre le matériau actif et la couche intercalaire, Y' pourra être un groupe amine si le matériau actif comporte un groupe acide carboxylique. Si la réaction envisagée est une réaction de complexation sur un métal, le(s) groupe(s) Y' pourront être un ligand capable de complexer ce métal, par exemple un groupe pyridyle ou triazole.

Dans les formules (I) à (V) données ci-dessus, les groupes espaceurs utilisables pour R⁴, R⁵, R⁶, R¹⁰ et R¹¹ peuvent être en particulier des groupes de formule (CH₂)ₙ avec n étant un nombre entier de 1 à 30, de préférence de 1 à 17.

On peut aussi utiliser des groupes constitués par des oligomères de formules : 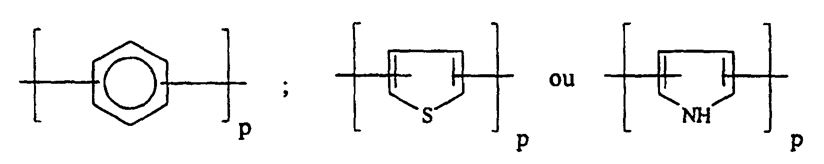 avec p étant un nombre entier de 1 à 6.
ou des groupes hydrocarbonés aliphatiques comportant un ou plusieurs substituants amide, urée, amine ou ester.

Selon une première manière de réalisation du procédé de l'invention permettant d'assurer la formation d'une couche intercalaire composée de deux types de molécules, le procédé comprend les étapes successives suivantes :
a) dépôt sur un substrat isolant comprenant de la silice d'une couche monomoléculaire desdites premières molécules organiques liées de façon covalente au substrat et comportant au moins un groupe organique capable d'améliorer les propriétés de contact avec le film de la présente invention,
b) dépôt des électrodes planes métalliques sur certaines zones du substrat ainsi traité,
c) dépôt sur les électrodes métalliques d'une couche monomoléculaire desdites secondes molécules liées de façon covalente auxdites électrodes et comportant au moins un groupe organique capable d'améliorer les propriétés de contact avec le film de la présente invention, et
d) dépôt du film selon l'invention sur l'ensemble formé par le substrat et les électrodes ainsi traités.

Dans ce mode de réalisation du procédé de l'invention, les premières et secondes molécules peuvent répondre aux formules (I) à (V) données ci-dessus. Dans le cas où le film de la présente invention est déposé par la technique de Langmuir-Blodgett, les groupes organiques Y et Y' des premières et secondes molécules peuvent être différents mais de préférence de nature analogue pour rendre les surfaces du substrat et des électrodes identiques du point de vue de leur propriétés physico-chimiques. Ces groupes organiques peuvent être des groupes hydrophobes ou des groupes hydrophiles. Dans le cas de réalisation d'une structure auto-assemblée, les groupes Y et Y' doivent être identiques afin de réagir avec le film de la présente invention qui sera ensuite déposé ou avec d'autres couches intercalaires éventuelles pour former une structure auto-assemblée par des liaisons chimiques.

Les réactions peuvent être du type complexation, le groupe organique étant par exemple un ligand du complexe, ou du type condensation, par exemple pour former une liaison ester amide etc.

Selon une variante de cette première manière de réalisation du procédé de l'invention, on choisit les premières molécules pour favoriser l'adhésion des électrodes métalliques en métal noble sur le substrat et améliorer la stabilité dans le temps de l'ensemble.

Dans ce cas, on utilise comme premières molécules, un silane ou siloxane substitué par un groupe hydrophile, amine ou thiol, par exemple des molécules de formule (I), (II) ou (III) avec le(s) Y représentant un groupe NH₂ ou SH, qui sont capables d'établir des liaisons de covalence avec les électrodes qui seront déposées sur le substrat traité.

Cette manière de réalisation du procédé de l'invention est adaptée à la réalisation d'un état de surface hydrophile sur le substrat isolant et sur les électrodes métalliques.

Dans cette variante, le procédé comprend les étapes successives suivantes :
a) dépôt sur un substrat isolant comprenant de la silice d'une couche des premières molécules comportant un groupe hydrophile, par exemple amine ou thiol,
b) dépôt sur certaines zones du substrat ainsi traité des électrodes métalliques,
c) dépôt sur les électrodes métalliques d'une couche des secondes molécules comportant un groupe organique hydrophile, choisi par exemple parmi OH, SH, NH₂ et COOH, et
d) dépôt d'un film selon l'invention sur l'ensemble ainsi traité.

Le choix dans ce procédé d'un silane ou siloxane comportant des groupes SH ou NH₂ permet d'améliorer l'adhérence des électrodes métalliques déposées sur le substrat traité. Cette propriété d'adhérence améliorée est décrite en particulier dans Goss et al, Analytical Chemistry, vol 63, n°1, 1991, pages 85 à 88.

Les molécules utilisées dans cette variante de mise en oeuvre du premier mode de réalisation de l'invention peuvent répondre aux formules (I) à (V) précitées avec le(s) Y représentant NH₂ ou SH et le(s) Y' représentant OH, COOH, NH₂ ou SH

Selon une seconde manière de réalisation du procédé de l'invention, on fixe sur le substrat et sur les électrodes une couche intercalaire constituée d'un seul type de molécules en réalisant les étapes successives suivantes :
a') dépôt sur un substrat isolant comprenant de la silice d'une couche de silane ou siloxane substitué par un groupe amine ou thiol, jouant le rôle de promoteur d'adhérence des électrodes métalliques sur le substrat,
b') dépôt des électrodes métalliques sur certaines zones du substrat ainsi traité,
c') dépôt sur les électrodes métalliques d'une couche de molécules organiques liées aux électrodes par des atomes de soufre ou d'azote,
d') oxydation de l'ensemble par de l'ozone pour éliminer les molécules organiques sur le substrat et les électrodes,
e') dépôt sur l'ensemble d'une couche monomoléculaire de molécules organiques de silane ou siloxane comportant un groupe organique capable d'améliorer les propriétés de contact avec le film de matériau actif, et
f') dépôt du film selon l'invention sur l'ensemble ainsi traité.

Dans l'étape a') de ce procédé, les molécules organiques utilisées pour améliorer l'adhérence des électrodes métalliques sur le substrat, peuvent répondre aux formules (I) à (III) précitées.

Dans l'étape c') de ce procédé, on dépose sur les électrodes des molécules organiques du type thiol, amine ou bisulfure telles que les molécules répondant aux formules (IV) ou (V), comme dans les modes de réalisation précédemment décrits, puis on soumet l'ensemble à un traitement d'oxydation par de l'ozone, ce qui a pour effet de détruire les molécules organiques. Dans l'étape suivante e'), on peut toutefois déposer non seulement sur le substrat isolant mais sur les électrodes métalliques des molécules organiques, constituées par des silanes ou siloxanes et établir des liaisons covalentes non seulement entre ces molécules et le substrat, mais aussi entre ces molécules et les électrodes.

On peut aussi utiliser dans l'étape e') des molécules de formule (I), (II) ou (III) et obtenir un état de la surface uniforme sur le substrat et les électrodes.

On suppose que le dépôt de silane ou siloxane sur les électrodes métalliques est rendu possible par le traitement d'oxydation précédent, après formation d'une liaison covalente avec des atomes de soufre ou d'azote.

Cette seconde manière de réalisation du procédé de l'invention convient en particulier à la réalisation de structures auto-assemblées car on peut établir des liaisons chimiques entre les molécules déposées lors de l'étape e') et un film de la présente invention dont on veut mesurer les propriétés électriques.

Pour mettre en oeuvre le procédé de l'invention, les étapes de dépôt de silane ou siloxane sur le substrat isolant peuvent être effectuées par des méthodes classiques telles que celles décrites dans Goss et al., Analytical Chemistry, vol. 63, n°1, 1991, pages 85 à 88, et dans Brzoska et al, Nature, vol 360, 1992, pages 719-721, et McGovern et al, Langmuir, 1994, vol 10, n°10, pages 3607-3614.

Celle-ci consiste généralement à immerger le substrat dans une solution du silane ou siloxane dans un solvant approprié. Celui-ci est de préférence apolaire, par exemple toluène dans le cas des silanes. La température utilisée dépend du silane ou siloxane utilisé.

Le dépôt des électrodes métalliques peut être effectué également par des techniques classiques telles que celles habituellement utilisées pour la réalisation d'électrodes minces, par exemple l'évaporation sous-vide ou la pulvérisation cathodique.

Le dépôt des molécules du type thiol, disulfure ou amine peut être effectué en utilisant les techniques classiques décrites dans Bain et al, Am. Chem. Soc., 1989, 111, pages 321-335.

Le film de la présente invention peut ensuite être déposé sur le substrat isolant suivant l'une des techniques classiques connues par l'homme du métier, par exemple une de celles citées précédemment.

Lorsque le film de la présente invention est déposé sur le substrat au moyen de la technique de Langmuir-Blodgett par transfert vertical, ce dépôt peut être réalisé à partir d'une solution des nanoparticules et des molécules organiques selon l'invention, ladite solution comprenant en outre une ou des molécule(s) amphiphile(s) telle(s) que par exemple un acide gras. La molécule amphiphile est un promoteur de transfert.

La présente invention se rapporte également à un capteur chimique caractérisé en ce qu'il comprend un substrat isolant, un film selon l'invention et au moins, une électrode de mesure en métal.

La, au moins une, électrode de métal est de préférence placée entre le substrat et le film, c'est-à-dire sous le film.

Le capteur peut comprendre en outre, à l'interface entre le substrat et le film de la présente invention, et à l'interface entre les électrodes et le film de la présente invention, au moins une couche monomoléculaire intercalaire constituée de molécules organiques liées de façon covalente au substrat ou aux électrodes, lesdites molécules comportant un groupe organique améliorant les propriétés de contact mécanique et/ou électrique entre le film de matériau actif et les électrodes métalliques, et entre le film de matériau actif et le substrat.

Le groupe organique des molécules de la couche intercalaire peut être choisi parmi les groupes hydrophiles, les groupes hydrophobes et les groupes formant une liaison chimique avec le film.

Les molécules de la couche intercalaire situées à l'interface entre le substrat et le film de l'invention, dites premières molécules, peuvent être différentes des molécules de la couche intercalaire situées à l'interface entre les électrodes et le film de la présente invention, dites secondes molécules.

Ces molécules peuvent être par exemple celles décrites précédemment dans le procédé de la présente invention.

Le substrat et les électrodes peuvent être ceux décrits précédemment.

D'autres caractéristiques et avantages de la présente invention apparaîtront encore à la lecture de la description des exemples de réalisation qui suivent et des dessins en annexe donnés bien entendu à titre illustratif et non limitatif.

### Brève description des dessins

- la figure 1 est un schéma illustrant la juxtaposition des domaines de nanoparticule et de molécules organiques dans un matériau selon l'invention ;
- la figure 2 est une illustration schématique d'une nanoparticule minérale sur laquelle sont greffées des molécules organiques qui forment une couronne organique selon l'invention ;
- la figure 3 est une illustration d'une réaction chimique de sur-greffage d'une molécule organique ayant pour fonction d'assurer les propriétés d'interaction du film avec l'espèce chimique à détecter sur des molécules organiques qui forment une couronne organique autour des nanoparticules selon l'invention ;
- la figure 4 est un schéma illustrant l'alternance des nanoparticules et des molécules organiques à l'échelle du nanomètre selon l'invention ;
- la figure 5 est un schéma illustrant la séparation des propriétés électriques du film assurées par des nanoparticules minérales et des propriétés d'interaction du film avec l'espèce chimique à détecter assurées par des molécules organiques ;
- la figure 6 est un tracé illustrant, pour deux capteurs selon l'invention, la séparation des propriétés de transduction et de détection dans un film selon la présente invention ne comprenant pas de molécules organiques d'interaction de l'espèce chimique à détecter, et dans un film selon la présente invention comprenant des molécules organiques d'interaction de l'espèce chimique à détecter ;
- la figure 7 est un tracé représentant la réponse de deux capteurs chimiques selon l'invention, illustrant la séparation des propriétés de transduction et de détection dans un film fabriqué selon un deuxième mode de réalisation de la présente invention ;
- la figure 8 est un tracé mettant en évidence la sélectivité d'un capteur selon l'invention à des vapeurs organiques pour des doses variables en fonction des molécules organiques contenues dans le film selon l'invention ;
- la figure 9 est un tracé illustrant l'orientation de la sélectivité d'un capteur selon l'invention exposé au toluène, à la triéthylamine et à l'acide acétique ;
- la figure 10 est un tracé illustrant la stabilité électrique d'un capteur selon l'invention ;
- la figure 11A est un tracé montrant la fiabilité d'un capteur selon l'invention sur une période de neuf mois, mettant en évidence la reproductibilité de la mesure de détection d'une espèce chimique avec un capteur selon l'invention, la réponse étant calculée sur la première exposition ;
- la figure 11B est un tracé montrant la fiabilité de détection d'une espèce chimique à partir de deux capteurs chimiques identiques selon l'invention pour la détection d'une même espèce chimique ;
- la figure 12a est un tracé illustrant la variation de résistance d'un film selon l'invention en fonction de la distance entre les électrodes d'un capteur selon l'invention ; et
- la figure 12b est un tracé illustrant la variation de la résistance d'un film purement organique en fonction de la distance entre les électrodes d'un capteur.

### Exemple 1 : Préparation de nanoparticules de platine entourées d'une couronne organique

300 mg de tétrachlorure de platine sont dissous dans 75 ml d'hexylamine (C₆H₁₃NH₂) dans un ballon de 500 ml. La solution obtenue est une solution de sel de platine de couleur orangée. Elle est appelée ci-après solution 1.

300 mg de borohydrure de sodium (NaBH₄), un agent réducteur, sont dans un premier temps dissous dans un mélange de 20 ml d'eau et 20 ml de méthanol. Après la complète dissolution du NaBH₄, 20 ml d'hexylamine sont ajoutés pour donner une solution 2.

330 mg du disulfure de la 4-mercapto-aniline ((SC₆H₄NH₂)₂) sont dissous dans un mélange de 15 ml de méthanol et 15 ml d'hexylamine pour donner une solution 3.

A t=0, la solution 2 (NaBH₄) est mélangée à la solution de sel de platine (solution 1) sous agitation vigoureuse. Le mélange, ou milieu réactionnel, prend une couleur marron foncée en quelques secondes, et à t=20 secondes, la solution de disulfure (solution 3) est ajoutée dans le milieu. A t=3 minutes 30 secondes, 200 ml d'eau sont introduits dans ce milieu réactionnel. Après 15 minutes, le mélange est transféré dans une ampoule à décanter. La phase organique isolée est lavée six fois avec 200 ml d'eau pure.

Le volume de la phase organique est ensuite réduit au rotavapeur à une température d'environ 35°C jusqu'à en obtenir 3 ou 4 ml. Il est ensuite transféré dans un tube à centrifugation, dans lequel se trouvent 300 mg de disulfure de la 4-mercapto-aniline 1 dissous dans 15 ml d'éthanol, et laissé sous agitation une nuit avant d'être centrifugé. Le surnageant contenant un excès de disulfure est éliminé et un précipité noir reste dans le fond du tube. Ce précipité est nettoyé avec 15 ml d'éthanol pendant 2 minutes puis de nouveau centrifugé. On obtient un précipité noir et un surnageant qui contient aussi des particules. Le précipité est lavé avec de l'éthanol puis du diéthyléther avant d'être séché sous vide pendant deux heures. Le produit ainsi obtenu contient une proportion massique de 20% pour la partie organique et de 80% pour le platine.

### Exemple 2 : Réaction de sur-greffage des nanoparticules fonctionnalisées :

Ces réactions de sur-greffage sont des réactions simples et classiques utilisées en chimie organique.

20 mg de nanoparticules sont dissous dans un volume minimum d'un solvant adapté, par exemple le diméthylsufloxyde ou la n-méthylformamide. La molécule qui doit être sur-greffée est choisie selon la sélectivité que l'on veut donner au capteur ou au film. Dans le cas d'un capteur de NO₂, on utilise par exemple une érythrosine ou une molécule de thiophène possédant une fonction chimique adaptée à la réactivité de la fonction chimique F2 présente sur la particule de platine. Par exemple, si la fonction F2 (voir figure 3) est une fonction amine, la molécule d'érythrosine ou de thiophène possédera une fonction aldéhyde ou chlorure d'acide ou isothiocyanate. La réaction est alors menée en présence d'un large excès de molécule à sur-greffer par exemple pour 20 mg de nanoparticules de platine fabriquées dans l'exemple 1 par la 4-mercapto-aniline qui contient 20% en masse de 4-mercapto-aniline soit 4 mg, on utilisera par exemple 10 équivalents de la molécule d'érythrosine isothiocyanate qui seront ajoutés directement à la solution de nanoparticules à sur-greffer. Dans cet exemple, la réaction est menée à température ambiante pendant 12 heures. Les particules sur-greffées sont ensuite isolées par addition d'un non solvant en large excès (par exemple l'acétonitrile ou le chloroforme) et les particules sont isolées par centrifugation. Des étapes de purification classiques sont menées si nécessaire, après mise en oeuvre de techniques de caractérisation classiques de la chimie organique telles que la spectroscopie UV, Visible ou Infrarouge ou la Résonance Magnétique Nucléaire. Ces étapes de purification peuvent par exemple comprendre une redissolution dans le diméthylsulfoxyde pur et une reprécipitation par un non solvant des particules.

### Exemple 3 : Fabrication d'un capteur selon la première stratégie de la présente invention

On prépare en premier lieu une solution des particules fraîchement synthétisées par exemple tel que dans l'exemple 1. On pèse pour cela 5 mg de produit qui sont dissous dans 10 ml de diméthylsufoxyde pour obtenir une solution de particules à 0,5 mg/ml.

Pour réaliser le film selon l'invention contenant les nanoparticules ayant une couronne organique, et des molécules responsables de la détection, par la méthode de Langmuir, on procède de la façon suivante : on prélève 0,5 ml de la solution de particules à laquelle on ajoute par exemple 0,05 ml d'une solution de phtalocyanine à 3x10⁻⁴ molaire dans du chloroforme. On complète ensuite ce mélange avec du chloroforme pur, soit 0,95 ml dans notre exemple pour obtenir un volume total de 1,5 ml. On répand une quantité de cette solution adaptée aux dimensions de la cuve, par exemple 1,2 ml de solution pour une cuve de 6,5 cm sur 45 cm. Le volume de l'épandage est de 0,6 ml. Cette solution est alors répandue à la surface de l'eau contenue dans une cuve de Langmuir puis le film est comprimé à la pression de transfert choisie.

Selon la technique de transfert adoptée, c'est-à-dire transfert horizontal ou transfert vertical, cette pression est faible, par exemple 2 mN/m, ou plus élevée par exemple 16 mN/m.

Dans le cas où le transfert est horizontal, les substrats munis ou non de leurs électrodes sont placés au fond de la cuve de Langmuir à environ 1 mm de la surface avant l'épandage. Après compression du film, le niveau de la cuve est abaissé et le film se dépose sur les substrats munis ou non de leurs électrodes. Cette opération est répétée autant de fois que nécessaire si l'on désire augmenter le nombre de couches constituant le matériau. Le transfert vertical s'effectue de façon classique à une vitesse d'environ 0,5 cm/min.

### Exemple 4 : Fabrication d'un capteur selon la deuxième stratégie de la présente invention

Dans la deuxième stratégie selon l'invention, la solution de nanoparticules sur-greffées par la molécule ayant pour fonction d'assurer les propriétés d'interaction du film avec l'espèce chimique à détecter est préparée dans un solvant adapté, par exemple du diméthylsulfoxyde. La concentration de cette solution est de l'ordre de 0,5 mg/ml de nanoparticules sur-greffées.

Comme dans la première stratégie, la solution utilisée pour l'épandage contient du chloroforme, par exemple 2/3 en volume. Dans le cas d'un transfert horizontal, la solution d'épandage peut contenir uniquement des nanoparticules sur-greffées. On mélange par exemple 0,5 ml de solution de nanoparticules sur-greffées avec 1 ml de chloroforme pur pour obtenir la solution d'épandage, et on répand une quantité de cette solution adaptée aux dimensions de la cuve, par exemple 1,2 ml de solution pour une cuve de 6,5 cm sur 45 cm. Avant l'épandage, les substrats munis ou non de leurs électrodes sont placés au fond à environ 1 mm de la surface de l'eau et l'on procède comme dans le cas de la première stratégie.

Dans le cas d'un transfert vertical classique, s'il n'est pas possible de transférer le film de Langmuir constitué uniquement de nanoparticules sur-greffées selon l'invention, la solution d'épandage utilisable pour le transfert peut contenir, en plus des nanoparticules sur-greffées, une molécule amphiphile par exemple un acide gras, en une proportion adéquate. Une telle solution peut par exemple être réalisée en mélangeant 0,5 ml de solution de nanoparticules sur-greffées à une concentration de 0,5 mg/ml dans le diméthylsulfoxyde, avec 0,03 ml d'une solution 10⁻³ M d'acide ω tricosenoïque dans le chloroforme et 0,97 ml de chloroforme pur. La molécule amphiphile sert de promoteur de transfert et permet de réaliser des transferts horizontaux de plusieurs couches, par exemple de 6 couches, sur les substrats munis ou non de leurs électrodes. Après le transfert, la molécule amphiphile peut être éliminée par un lavage du capteur avec un solvant adapté, par exemple du chloroforme.

### Exemple 5

Dans cet exemple, on suit la première manière de réalisation précitée d'un capteur chimique comprenant un film de l'invention, en effectuant les étapes suivantes :

### 1) Silanisation du substrat

La molécule utilisée pour cette silanisation est de l'octadécyl-trichlorosilane.

Tout d'abord, on nettoie soigneusement le substrat au moyen de savon basique, puis on le rince 10 fois à l'eau déminéralisée. On le rend ensuite hydrophile par traitement dans une solution piranha qui est un mélange d'eau oxygénée et d'acide sulfurique dans un rapport 3 : 7 en volume, à une température de 150°C pendant 1 heure, puis on le rince 10 fois à l'eau déminéralisée et on le sèche sous azote dans une étuve à 100°C.

On trempe ensuite le substrat ainsi traité dans une solution contenant 10⁻³ mol/l d'octadécyl-trichlorosilane dans du toluène, pendant 30 minutes à la température ambiante.

On obtient ainsi un substrat modifié par une couche de molécules comportant des terminaisons hydrophobes.

### 2) Dépôt des électrodes en or

Ceci est réalisé par les techniques classiques d'évaporation sous vide et on dépose ainsi des électrodes d'or interdigitées de 500 Å d'épaisseur qui sont formées de 20 peignes de 5 mm de longueur et 150 µm de large, séparés de 150 µm.

### 3) Fonctionnalisation des électrodes

Dans cette étape, on dépose sur les électrodes en or du dodécane thiol. Ceci est réalisé en trempant le substrat recouvert des électrodes dans une solution à 10⁻³ mol/l de dodécanethiol dans de l'éthanol, pendant 12 heures, à la température ambiante. On obtient ainsi une liaison des molécules avec les électrodes d'or, ces molécules comportant une terminaison hydrophobe comme le silane fixé précédemment sur le substrat.

### 4) Dépôt du film selon l'invention

Le dépôt de ce film est réalisé par la technique de Langmuir-Blodgett comme il est décrit dans Palacin S. et Barraud A. , 1991, Colloïds and Surfaces, 52, pages 123-146. On dépose ainsi 10 couches pour obtenir une épaisseur de 200 Å.

### Exemple 6

Dans cet exemple, on suit la variante de la première manière de réalisation précitée d'un capteur chimique comprenant un film de l'invention pour obtenir une couche à terminaison hydrophile.

Dans ce cas, on prépare le substrat comme dans l'exemple 5, puis on dépose sur celui-ci une couche de (3-mercaptopropyl)triméthoxysilane en suivant le mode opératoire décrit par Goss et al dans Analytical Chemistry, 1991, 63, pages 85-88.

Dans ce but, on trempe le substrat dans une solution constituée par 400 g de propanol et 10 g d'eau contenant 10 g de (3-mercapto-propyl)triméthoxysilane.

On dépose ensuite sur le substrat ainsi traité des électrodes d'or en opérant comme dans l'exemple 1, puis on revêt ces électrodes d'une couche de bis(2-hydroxyéthyl)disulfure en immergeant le substrat dans une solution à 10⁻³ mol/l de ce disulfure dans l'éthanol, pendant environ 24 heures à une température voisine de 20°C. On obtient ainsi un substrat comportant des terminaisons hydrophiles (thiol) et des électrodes comportant également des terminaisons hydrophiles (OH).

Le substrat ainsi traité peut être utilisé pour réaliser le dépôt du film de la présente invention en suivant le même mode opératoire que dans l'exemple 5.

Il est clair que la réalisation, conformément à l'invention, d'une couche intercalaire liée de façon covalente au substrat et aux électrodes et comportant des groupes hydrophiles en surface améliore de façon importante la stabilité du capteur en fonction du temps.

### Exemple 7

Dans cet exemple, on suit la seconde manière de réalisation d'un capteur chimique précitée comprenant un film de l'invention, c'est-à-dire que l'on effectue une étape complémentaire d'oxydation, après modification du substrat et des électrodes respectivement par un silane et par un thiol, et que l'on dépose ensuite sur l'ensemble une couche de dodécanethiol.

Les premières étapes du procédé consistent à traiter le substrat, puis à réaliser le dépôt des électrodes métalliques et la fonctionnalisation des électrodes métalliques en utilisant pour la silanisation du substrat du (3-mercaptopropyl)-trimétoxysilane comme dans l'exemple 6 et en modifiant ensuite les électrodes par du dodécanethiol, comme dans l'exemple 5. On obtient ainsi un substrat recouvert de molécules de silane comportant en surface un groupe SH et d'électrodes en or recouvertes de dodécanethiol.

On procède alors à une oxydation par de l'ozone en effectuant cette oxydation dans un appareil formant de l'ozone par irradiation UV à partir d'oxygène, pendant une demi-heure. Dans ces conditions, les chaînes hydrocarbonées des composés organiques déposés précédemment sont détruites et on peut procéder ensuite à un dépôt de silane sur l'ensemble du substrat et des électrodes en réalisant la silanisation par de l'octadécyl trichlorosilane, comme dans l'exemple 5.

On constate alors que la surface des électrodes comme la surface du substrat présentent de mauvaises propriétés de mouillabilité avec l'eau, l'angle de contact avec l'eau étant de 115° sur le verre et de 110° sur l'or. Ce résultat confirme que l'on a obtenu une modification homogène de la totalité de la surface du substrat par l'octadécyl-trichlorosilane.

Ainsi, selon la présente invention, il se dégage par exemple la première et la deuxième méthodes de fabrication d'un capteur chimique des exemples 8 et 9 suivants :

### Exemple 8 : 1ère méthode

Elle fait intervenir quatre ou cinq étapes :
1ère étape : synthèse des nanoparticules fonctionnalisées par exemple telle que dans l'exemple 1,
2ème étape : conditionnement du substrat suivant deux possibilités :
   a)nettoyage, ou
   b)nettoyage, dépôt des électrodes de mesures et traitement de surface par exemple selon l'un des deux procédés décrits dans les exemples 5 à 7,
3ème étape : préparation d'une solution contenant à la fois les particules fonctionnalisées et les molécules organiques d'interaction assurant la détection de l'espèce chimique,
4ème étape : dépôt du matériau sur le support,
5ème étape : dépôt des électrodes dans le cas où celles-ci n'ont pas été introduite dans la 2ème étape.

### Exemple 9 : 2ème méthode

Elle fait intervenir cinq ou six étapes :
1ère étape : synthèse des nanoparticules fonctionnalisées par exemple telle que dans l'exemple 1,
2ème étape : réaction de sur-greffage de la molécule organique d'interaction permettant d'orienter les propriétés de sélectivité sur les particules fonctionnalisées telle que dans l'exemple 2,
3ème étape : conditionnement du substrat suivant deux possibilités :
   a)nettoyage, ou
   b)nettoyage, dépôt des électrodes de mesures et traitement de surface selon l'un des procédés décrits dans les exemples 5 à 7,
4ème étape : préparation d'une solution contenant les particules sur-greffées,
5ème étape : dépôt du matériau sur le support selon l'une des diverses techniques précitées, et
6ème étape : dépôt des électrodes dans le cas où celles-ci n'ont pas été introduites dans la 3ème étape.

### Exemple 10 : Séparation des fonctions de transduction et de détection avec des matériaux fabriqués selon la première stratégie

Les constituants du système sont :
- des nanoparticules de platine fonctionnalisées par de la 4-mercapto-aniline,
- des molécules de tétraoctyltétraamidophtalocyanine de cobalt pour la détection de l'espèce chimique.

La sélectivité du dispositif est assurée par la molécule organique précitée, qui est la molécule organique d'interaction. C'est ce que montre la figure 6 annexée. Cette figure permet de comparer la réponse de deux capteurs de la présente invention vis-à-vis du dioxyde d'azote. Le premier capteur référencé par la courbe 11 (ordonnée de gauche) ne comportant que les nanoparticules fonctionnalisées est insensible au gaz NO₂, le second capteur référencé par la courbe 13 (ordonnée de droite) comporte les nanoparticules et la molécule organique d'interaction responsable de la sensibilité du dispositif au dioxyde d'azote.

### Exemple 11 : Séparation des fonctions de transduction et de détection avec des matériaux fabriqués selon la deuxième stratégie

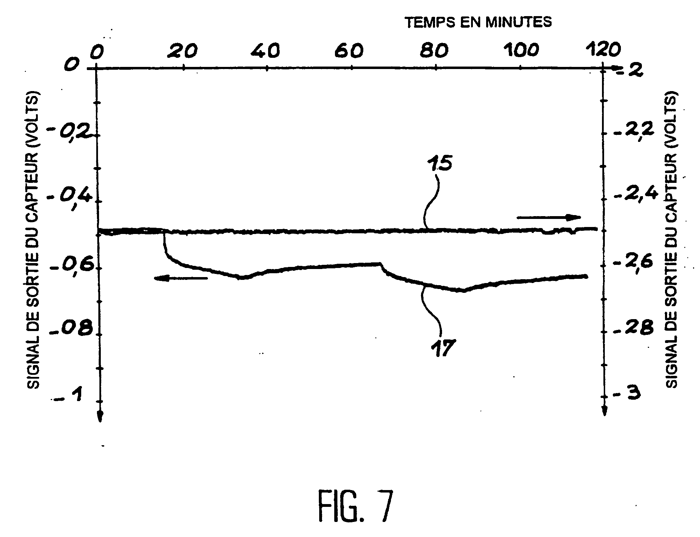

Les particules utilisées dans cet exemple ont été sur-greffées par une molécule de thiophène possédant une fonction chlorure d'acide (voir équation (I) précitée). La figure 7 présente la réponse au NO₂ d'un dispositif réalisé à partir de particules de platine simplement fonctionnalisées par la 4-mercapto-aniline (courbe référencée 15) et de ces mêmes particules sur-greffées par la molécule de thiophène (courbe référencée 17). Ces courbes 15 et 17 de réponse montrent clairement que le sur-greffage rend le capteur sensible au NO₂, alors que la même particule non sur-greffée y est insensible.

### Exemple 12 : Orientation de la sélectivité des capteurs

Les courbes de réponse présentées sur les figures 6 et 7 montrent déjà l'orientation de la sélectivité vis-à-vis du NO₂. Les résultats présentés dans cet exemple se rapportent à l'action de vapeurs de molécules organiques.

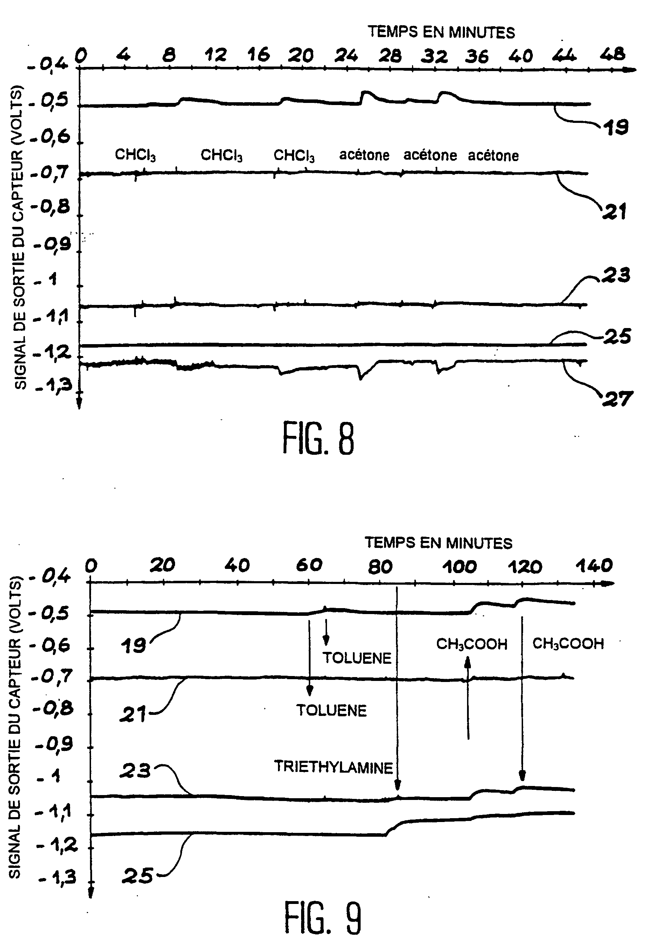

Des capteurs fabriqués selon les deux stratégies présentées précédemment ont été simultanément exposés à divers polluants organiques. La figure 8 met en évidence un effet de sélectivité en fonction de la nature des molécules organiques d'interaction présentes dans le film de détection chimique de l'invention.

Le tableau I suivant montre la nature de la molécule organique d'interaction dans le film de détection chimique pour chaque capteur fabriqué selon l'invention.

**Tableau 1**

| Capteur n° | Molécule organique d'interaction |
|---|---|
| 19 | érythrosine B isomère II* |
| 21 | bromure de tétraoctadécyltétrapyridinium [3,4-b:3'.4'-g:3",4"-l:3'",4'"-q] porphyrazine de cuivre* |
| 23 | tétra(hexyloxycarbonyl)phtalocyanine de cuivre* |
| 25 | 4-mercapto-aniline* |
| 27 | thiophène* |

| | |
|---|---|
| * Catalogue Aldrich | |

Sur la figure 8, la courbe 19 correspond au capteur 19, la courbe 21 au capteur 21, etc...

Ce tracé montre que le capteur 19 est sensible aux vapeurs de chloroforme ou d'acétone, tandis que le capteur 21 ne fournit aucune réponse. Le capteur 27 montre une variation de signal opposée à celle du capteur 19. Les capteurs 23 et 25 semblent insensibles au chloroforme mais fournissent une très légère réponse à l'acétone.

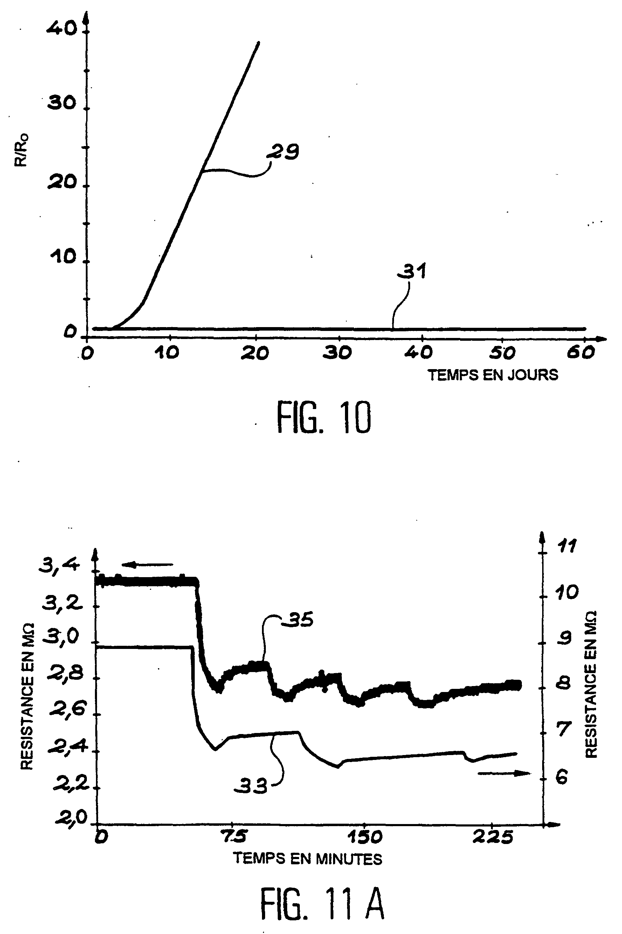

La figure 9 montre l'effet de l'exposition à d'autres polluants, toluène, triéthylamine, acide acétique sur les mêmes capteurs. Le capteur 19 est sensible au toluène, et à l'acide acétique, mais pas à la triéthylamine. Le capteur 21 est insensible à tous les polluants. Le capteur 23 est insensible au toluène et à la triéthylamine mais sensible à l'acide acétique. Le capteur 25 est sensible à la triéthylamine et peu sensible à l'acide acétique.

### Exemple 13 : Stabilité des capteurs dans le temps

La figure 10 illustre la stabilité électrique des matériaux hybrides fabriqués selon la première ou la deuxième méthode. Sur ce tracé, l'axe des ordonnées représente le rapport de la résistance du capteur au temps t sur la résistance du capteur en temps t=0 (résistance initiale du capteur), référencé R/Rₒ. Tandis que le matériau purement organique (courbe référencée 29) montre une dérive très forte, le matériau hybride (référencé 31) possède une bien meilleure stabilité électrique dans le temps.

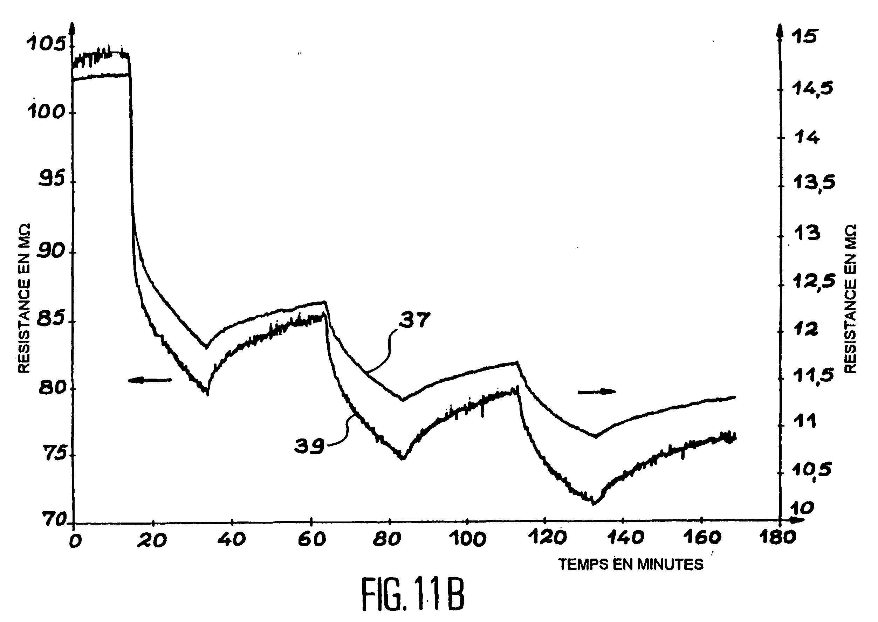

### Exemple 14 : Fiabilité des capteurs dans le temps: répétabilité (figure 11A) et reproductibilité (figure 11B)

Les capteurs testés dans cet exemple comprennent un film selon l'invention comprenant des nanoparticules de platine greffées par des molécules organiques de mercapto-aniline sur-greffées par des molécules organiques de thiophène.

Des courbes de réponse d'un capteur sensible au NO₂ ont été enregistrées à neuf mois d'intervalle. Le polluant est NO₂, et la réponse est calculée sur la première exposition. La figure 11A illustre les résultats de ces mesures. Sur cette figure, la courbe 33 est le résultat de mesures effectuées le 28 mai 1997, elle présente une variation de 18%, et la courbe 35 est le résultat de mesures effectuées le 27 février 1997, elle présente une variation de 24%. Les réponses calculées sur la première exposition montrent un écart de seulement 5%.

Des courbes de réponse d'un capteur sensible au NO₂ ont été enregistrées pour deux mêmes capteurs fabriqués suivant le procédé de l'invention. Le polluant est NO₂ et la réponse est celle lue sur la première exposition. La figure 11B illustre les résultats de ces mesures. Sur cette figure, les courbes 37 et 39 sont le résultat des mesures effectuées à partir de ces deux capteurs "identiques" selon l'invention.

La figure 11A montre la répétabilité dans le temps des mesures de détection sur un même capteur selon l'invention et la figure 11B montre la reproductibilité des mesures de détection pour deux capteurs identiques selon l'invention.

### Exemple 15 : Suppression des résistances de contact

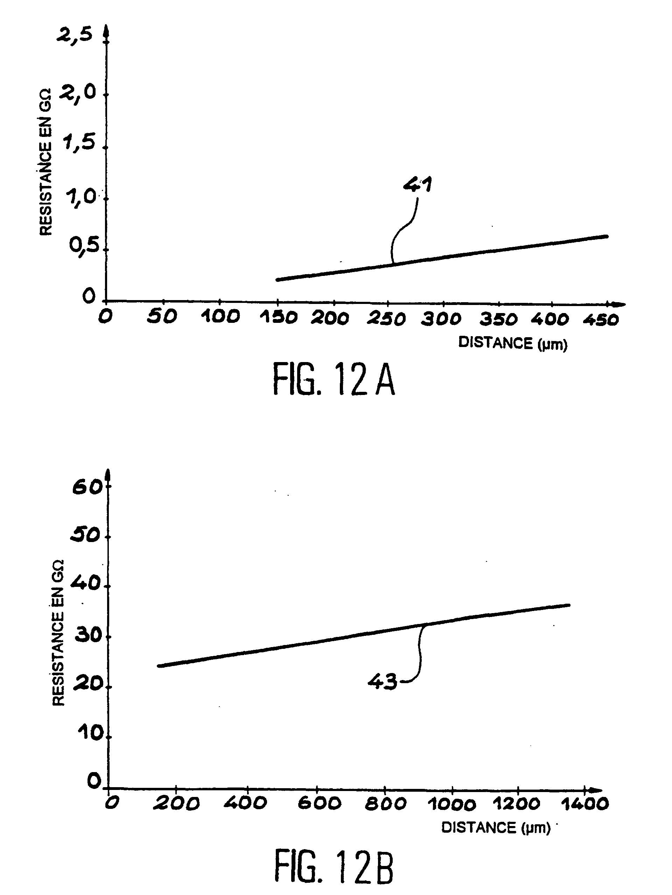

La figure 12A montre la variation de la résistance d'un film hybride de l'invention comprenant des particules fonctionnalisées et des molécules organiques d'interaction, (courbe référencée 41 sur la figure 12A), et la figure 12B la variation de la résistance d'un film purement organique, en fonction de la distance entre deux électrodes de mesure (courbe référencée 43 sur la figure 12B). Une estimation de la valeur de la résistance de contact est donnée par la valeur de l'ordonnée à l'origine. La figure 12A montre que l'ordonnée à l'origine qui correspond à la résistance de contact est négligeable et la figure 12B montre que l'ordonnée à l'origine qui correspond à la résistance de contact n'est pas négligeable. Ainsi, la présence de la particule fonctionnalisée permet de rendre négligeable la résistance de contact des dispositifs.

## Revendications

1. Film de détection d'une espèce chimique, comprenant des nanoparticules minérales, et des molécules organiques greffées sur lesdites nanoparticules de sorte qu'elles forment une couronne organique autour desdites nanoparticules, **caractérisé en ce que** des molécules organiques d'interaction du film avec l'espèce chimique à détecter sont mélangées avec les nanoparticules autour desquelles une couronne organique est formée ou greffées sur les molécules organiques qui forment une couronne organique autour desdites nanoparticules.

2. Film selon la revendication 1, dans lequel lesdites nanoparticules comprennent au moins un membre choisi dans un ensemble comprenant du platine, de l'or, de l'argent, du CdS, du TiO₂.

3. Film selon la revendication 1 ou 2, dans lequel lesdites nanoparticules ont une taille allant de 1 à 100 nm de diamètre.

4. Film selon la revendication 1 ou 2, dans lequel lesdites nanoparticules ont une taille allant de 1 à 10 nm de diamètre.

5. Film selon l'une quelconque des revendications 1 à 4, dans lequel les molécules organiques d'interaction du film avec l'espèce chimique à détecter comprennent une molécule choisie dans un ensemble comprenant une phtalocyanine, une tétrapyridinophtalocyanine, un thiophène, un oligothiophène, une porphirine, une érythrosine, un éther couronne, un aza-éther couronne, un cryptophane, une cyclodextrine, un alkyl linéaire ou ramifié comprenant de 1 à 12 atomes de carbone, un benzène, ou un dérivé de ces molécules, substituée(s) ou non substituée(s) par une ou plusieurs fonctions chimiques d'interaction avec l'espèce chimique à détecter.

6. Film selon l'une quelconque des revendications 1 à 5, dans lequel les molécules organiques greffées sur lesdites nanoparticules sont des molécules bifonctionnelles qui possèdent d'une part, au moins une fonction chimique de fixation sur lesdites nanoparticules, et, d'autre part, au moins une fonction chimique de liaison avec les molécules organiques d'interaction du film avec l'espèce chimique à détecter.

7. Film selon l'une quelconque des revendications 1 à 5, dans lequel les molécules organiques formant une couronne organique autour desdites nanoparticules, comprennent une molécule choisie dans un ensemble incluant un alkyl linéaire ou ramifié comprenant de 1 à 12 atomes de carbone, ou un aryl, substitué par une ou plusieurs fonction(s) chimique(s) de fixation sur lesdites nanoparticules.

8. Film selon la revendication 6 ou 7 dans lequel la, au moins une, fonction chimique de fixation sur lesdites nanoparticules est choisie dans un ensemble comprenant un thiolate, un isonitrile, une amine, un trioctylphosphate et une pyridine.

9. Film selon la revendication 6, ou selon la revendication 8 lorsqu'elle dépend de la revendication 6, dans lequel la, au moins une, fonction chimique de liaison avec les molécules organiques d'interaction du film avec l'espèce chimique à détecter est choisie dans un ensemble comprenant une pyridine, une fonction amine, une fonction carboxylate, une fonction acide, une fonction alcool, une fonction aldéhyde, une fonction isocyanate, une fonction isothiocyanate, une fonction ester, une fonction -COCl.

10. Film selon la revendication 5 ou 8 lorsqu' elle dépend de la revendication 6, ou 9, dans lequel la, au moins une, fonction chimique d'interaction avec l'espèce chimique à détecter est choisie dans un ensemble comprenant une fonction amine, une fonction carboxylate, une fonction acide, une fonction alcool, une fonction aldéhyde, une fonction isocyanate, une fonction isothiocyanate, une fonction ester.

11. Film selon la revendication 6, dans lequel les molécules organiques bifonctionnelles comprennent une molécule choisie dans un ensemble comprenant un thiophénol, un alkylthiol linéaire ou ramifié comprenant de 1 à 11 atomes de carbone, et un arylthiol.

12. Film selon l'une quelconque des revendications 1 à 4, dans lequel les molécules organiques greffées sur lesdites nanoparticules sont choisies dans un ensemble comprenant la 4-mercapto-aniline, la 4-mercapto-pyridine, le N-aminoalcane thiol et la mecapto-hydroxyalcane, ou un mélange de celles-ci.

13. Film selon la revendication 1, dans lequel lesdites nanoparticules sont des nanoparticules de platine, et dans lequel des molécules organiques de 4-mercapto-aniline sont greffées sur les nanoparticules de platine.

14. Film selon la revendication 13, dans lequel des molécules organiques de thiophène ou d'érythrosine sont greffées sur les molécules de 4-mercapto-aniline.

15. Film selon la revendication 13 comprenant en outre une tétrapyridinophtalocyanine.

16. Film selon l'une quelconque des revendications précédentes, dans lequel lesdites nanoparticules alternent avec les molécules organiques de manière à former un mélange homogène à l'échelle du nanomètre.

17. Procédé de fabrication d'un capteur chimique comprenant un substrat isolant, un film de détection d'une espèce chimique, et au moins une électrode de métal, **caractérisé en ce qu'**il comprend une étape de fabrication d'un film selon l'une quelconque des revendications 1 à 16, une étape de dépôt de ce film sur le substrat isolant, et une étape de dépôt de la, ou des, électrode(s) de métal soit sur le substrat isolant avant dépôt du film, soit sur le film après dépôt de ce dernier sur le substrat isolant.

18. Procédé selon la revendication 17, dans lequel les électrodes sont déposées sur le substrat isolant, avant dépôt du film.

19. Procédé selon la revendication 17 ou 18, comprenant en outre une étape qui consiste à réaliser à l'interface entre le substrat isolant et le film et/ou à l'interface entre les électrodes et le film, au moins une couche monomoléculaire intercalaire constituée de molécules comportant un groupe organique capable d'améliorer les propriétés de contact mécanique et/ou électrique entre le film et les électrodes métalliques et/ou entre le film et le substrat.

20. Procédé selon la revendication 19, dans lequel les molécules de la couche intercalaire située à l'interface entre le substrat et le film, dites premières molécules, sont différentes des molécules de la couche intercalaire située à l'interface entre les électrodes métalliques et le film, dites secondes molécules.

21. Procédé selon la revendication 20, dans lequel lesdites premières molécules sont liées au substrat isolant par l'intermédiaire d'atomes de silicium, et les secondes molécules sont liées aux électrodes par l'intermédiaire d'atomes de soufre ou d'azote.

22. Procédé selon l'une quelconque des revendications 17 à 21, dans lequel le dépôt du film étant réalisé par transfert vertical, il est réalisé à partir d'une solution des nanoparticules et des molécules organiques comprenant une ou des molécule(s) amphiphile(s).

23. Capteur chimique **caractérisé en ce qu'**il comprend un substrat isolant, un film selon l'une quelconque des revendications 1 à 16, et au moins une électrode de mesure en métal.

24. Capteur chimique selon la revendication 23 dans lequel au moins une électrode de mesure en métal est placée entre le substrat isolant et le film.

25. Capteur chimique selon la revendication 23 ou 24, comprenant en outre, à l'interface entre le substrat et le film, au moins une couche monomoléculaire intercalaire constituée de molécules organiques liées de façon covalente au substrat ou aux électrodes, lesdites molécules comportant un groupe organique améliorant les propriétés de contact mécanique et/ou électrique entre le film de matériau actif et les électrodes métalliques, et entre le film de matériau actif et le substrat.

26. Capteur chimique selon la revendication 25, dans lequel le groupe organique des molécules de la couche intercalaire est choisi parmi les groupes hydrophiles, les groupes hydrophobes, et les groupes formant une liaison chimique avec ledit film.

27. Capteur chimique selon la revendication 25 ou 26, dans lequel les molécules de la couche intercalaire situées à l'interface entre le substrat du film, dites premières molécules, sont différentes des molécules de la couche intercalaire situées à l'interface entre les électrodes et ledit film, dites secondes molécules.

## Patentansprüche

1. Film zum Nachweis einer chemischen Species, der mineralische Nanoteilchen und organische Moleküle, die auf die Nanoteilchen so aufgepfropft sind, dass sie um die Nanoteilchen herum eine organische Krone (Kappe) bilden, enthält,
**dadurch gekennzeichnet, dass** organische Moleküle aus der Wechselwirkung zwischen dem Film und der nachzuweisenden chemischen Species mit den Nanoteilchen gemischt sind, um die herum eine organische Krone gebildet worden ist, oder auf die organischen Moleküle aufgepfropft worden sind, die eine organische Krone um die Nanoteilchen herum bilden.

2. Film nach Anspruch 1, worin die Nanoteilchen mindestens einen Vertreter, ausgewählt aus der Gruppe Platin, Gold, Silber, CdS und TiO₂ umfassen.

3. Film nach Anspruch 1 oder 2, worin die Nanoteilchen eine Größe mit einem Durchmesser von 1 bis 100 nm aufweisen.

4. Film nach Anspruch 1 oder 2, worin die Nanoteilchen eine Größe mit einem Durchmesser von 1 bis 10 nm aufweisen.

5. Film nach einem der Ansprüche 1 bis 4, worin die organischen Moleküle aus der Wechselwirkung zwischen dem Film und der nachzuweisenden chemischen Species ein Molekül umfassen, das ausgewählt ist aus einer Gruppe, die umfasst ein Phthalocyanin, ein Tetrapyridinophthalocyanin, ein Thiophen, ein Oligothiophen, ein Porphyrin, ein Erythrosin, einen Kronenether, einen Azakronenether, ein Cryptophan, ein Cyclodextrin, ein lineares oder verzweigtes Alkyl mit 1 bis 12 Kohlenstoffatomen, ein Benzol oder ein Derivat dieser Moleküle, die unsubstituiert oder substituiert sind durch eine oder mehrere chemische Funktionen aus einer Wechselwirkung mit der nachzuweisenden chemischen Species.

6. Film nach einem der Ansprüche 1 bis 5, worin die auf die Nanoteilchen aufgepfropften organischen Moleküle bifunktionelle Moleküle darstellen, die einerseits mindestens eine chemische Funktion zur Fixierung auf den Nanoteilchen und andererseits mindestens eine chemische Funktion zur Ausbildung einer Bindung mit den organischen Molekülen aus der Wechselwirkung zwischen dem Film und der zu bestimmenden chemischen Species aufweisen.

7. Film nach einem der Ansprüche 1 bis 5, worin die organischen Moleküle, die um die Nanoteilchen herum eine organische Krone bilden, ein Molekül umfassen, das ausgewählt ist aus einer Gruppe, die umfasst ein lineares oder verzweigtes Alkyl mit 1 bis 12 Kohlenstoffatomen oder ein Aryl, das durch ein oder mehrere chemische Funktionen zur Fixierung an den Nanoteilchen substituiert ist.

8. Film nach Anspruch 6 oder 7, worin die mindestens eine chemische Funktion zur Fixierung auf den Nanoteilchen ausgewählt ist aus einer Gruppe, die ein Thiolat, ein Isonitril, ein Amin, ein Trioctylphosphat und ein Pyridin umfasst.

9. Film nach Anspruch 6 oder nach Anspruch 8, wenn dieser von dem Anspruch 6 abhängt, worin die mindestens eine chemische Funktion zur Bildung einer Bindung mit den organischen Molekülen aus der Wechselwirkung zwischen dem Film und der nachzuweisenden chemischen Species ausgewählt ist aus einer Gruppe, die umfasst eine Pyridinfunktion, eine Aminfunktion, eine Carboxylatfunktion, eine Säurefunktion, eine Alkoholfunktion, eine Aldehydfunktion, eine Isocyanatfunktion, eine Isothiocyanatfunktion, eine Esterfunktion und eine COCl-Funktion.

10. Film nach Anspruch 5 oder 8, wenn dieser von dem Anspruch 6 oder 9 abhängt, worin die mindestens eine chemische Funktion aus einer Wechselwirkung mit der nachzuweisenden chemischen Species ausgewählt ist aus einer Gruppe, die umfasst, eine Aminfunktion, eine Carboxylatfunktion, eine Säurefunktion, eine Alkoholfunktion, eine Aldehydfunktion, eine Isocyanatfunktion, eine Isothiocyanatfunktion und eine Esterfunktion.

11. Film nach Anspruch 6, worin die organischen bifunktionellen Moleküle ein Molekül umfassen, das ausgewählt ist aus einer Gruppe, die umfasst ein Thiophenol, ein lineares oder verzweigtes Alkylthiol mit 1 bis 11 Kohlenstoffatomen und ein Arylthiol.

12. Film nach einem der Ansprüche 1 bis 4, worin die auf die Nanoteilchen aufgepfropften organischen Moleküle ausgewählt sind aus einer Gruppe, die umfasst 4-Mercaptoanilin, 4-Mercaptopyridin, N-Aminoalkanthiol, Mercaptohydroxyalkan oder eine Mischung davon.

13. Film nach Anspruch 1, worin die Nanoteilchen Platin-Nanoteilchen sind und auf die Platin-Nanoteilchen organische Moleküle aus 4-Mercaptoanilin aufgepfropft sind.

14. Film nach Anspruch 13, worin organische Moleküle von Thiophen oder Erythrosin auf die 4-Mercaptoanilin-Moleküle aufgepfropft sind.

15. Film nach Anspruch 13, der außerdem ein Tetrapyridinophthalocyanin umfasst.

16. Film nach einem der vorhergehenden Ansprüche, worin die Nanoteilchen mit organischen Molekülen in der Weise abwechseln, dass eine homogene Mischung im Nanometerbereich gebildet wird.

17. Verfahren zur Herstellung eines chemischen Sensors, der ein isolierendes Substrat, einen Film zum Nachweis einer chemischen Species und mindestens eine Metallelektrode umfasst, **dadurch gekennzeichnet, dass** das Verfahren eine Stufe zur Herstellung eines Film nach einem der Ansprüche 1 bis 16, eine Stufe zur Abscheidung dieses Film auf dem isolierenden Substrat und eine Stufe zur Abscheidung der Metallelektrode(n) entweder auf dem isolierenden Substrat vor der Abscheidung des Films oder auf dem Film nach der Abscheidung des letzteren auf dem isolierenden Substrat umfasst.

18. Verfahren nach Anspruch 17, worin die Elektroden vor der Abscheidung des Films auf dem isolierenden Substrat abgeschieden werden.

19. Verfahren nach Anspruch 17 oder 18, das außerdem eine Stufe umfasst, die darin besteht, dass man an der Grenzfläche zwischen dem isolierenden Substrat und dem Film und/oder an der Grenzfläche zwischen den Elektroden und dem Film mindestens eine monomolekulare Interkalationsschicht bildet, die besteht aus Molekülen, die eine organische Gruppe aufweisen, welche die Eigenschaften eines mechanischen und/oder elektrischen Kontakts zwischen dem Film und den Metallelektroden und/oder zwischen dem Film und dem Substrat verbessern können.

20. Verfahren nach Anspruch 19, worin die Moleküle der Interkalationsschicht, die an der Grenzfläche zwischen dem Substrat und dem Film angeordnet ist, hier als erste Moleküle bezeichnet, von den Molekülen der Interkalationsschicht, die an der Grenzfläche zwischen den Metallelektroden und dem Film angeordnet ist, hier als zweite Moleküle bezeichnet, verschieden sind.

21. Verfahren nach Anspruch 20, worin die ersten Moleküle mittels Siliciumatomen an das isolierende Substrat gebunden werden und die zweiten Moleküle mittels Schwefel- oder Stickstoffatomen an die Elektroden gebunden werden.

22. Verfahren nach einem der Ansprüche 17 bis 21, worin die Abscheidung des Films, die durch vertikalen Transfer erfolgt, durchgeführt wird unter Verwendung einer Lösung von Nanoteilchen und organischen Molekülen, die ein oder mehr amphiphile Moleküle umfassen.

23. Chemischer Sensor, **dadurch gekennzeichnet, dass** er ein isolierendes Substrat, einen Film nach einem der Ansprüche 1 bis 16 und mindestens eine Messelektrode aus Metall umfasst.

24. Chemischer Sensor nach Anspruch 23, worin mindestens eine Messelektrode aus Metall zwischen dem isofierendenSubstrat und dem Film angeordnet ist.

25. Chemischer Sensor nach Anspruch 23 oder 24, der außerdem an der Grenzfläche zwischen dem Substrat und dem Film mindestens eine monomolekulare Interkalationsschicht umfasst, die aus organischen Molekülen besteht, die auf kovalente Weise an das Substrat oder die Elektroden gebunden sind, wobei die Moleküle eine organische Gruppe aufweisen, welche die mechanischen und/oder elektrischen Kontakteigenschaften zwischen dem Film aus dem aktiven Material und den Metallelektroden und zwischen dem Film aus dem aktiven Material und dem Substrat verbessern.

26. Chemische Sonde nach Anspruch 25, worin die organische Gruppe der Moleküle der Interkalationsschicht ausgewählt ist aus hydrophilen Gruppen, hydrophoben Gruppen und Gruppen, die eine chemische Bindung mit dem Film bilden.

27. Chemischer Sensor nach Anspruch 25 oder 26, worin die Moleküle der Interkalationsschicht, die an der Grenzfläche zwischen dem Substrat und dem Film angeordnet ist, hier als erste Moleküle bezeichnet, von den Molekülen der Interkalationsschicht, die an der Grenzfläche zwischen den Elektroden und dem Film angeordnet ist, hier als zweite Moleküle bezeichnet, verschieden sind.

## Claims

1. Film for detecting a chemical species, comprising mineral nanoparticles, and organic molecules grafted onto the said nanoparticles such that they form an organic crown around the said nanoparticles, **characterized in that** organic molecules for interaction of the film with the chemical species to be detected are mixed with the nanoparticles around which an organic crown is formed, or are grafted onto the organic molecules which form an organic crown around the said nanoparticles.

2. Film according to Claim 1, in which the said nanoparticles comprise at least one member chosen from a set comprising platinum, gold, silver, CdS and TiO₂.

3. Film according to Claim 1 or 2, in which the said nanoparticles have a size ranging from 1 to 100 nm in diameter.

4. Film according to Claim 1 or 2, in which the said nanoparticles have a size ranging from 1 to 10 nm in diameter.

5. Film according to any one of Claims 1 to 4, in which the organic molecules for interaction of the film with the chemical species to be detected comprise a molecule chosen from a set comprising a phthalocyanin, a tetrapyridinophthalocyanin, a thiophene, an oligothiophene, a porphyrin, an erythrosin, a crown ether, an aza-crown ether, a cryptophane, a cyclodextrin, a linear or branched alkyl containing from 1 to 12 carbon atoms, a benzene, or a derivative of these molecules, which is (are) unsubstituted or substituted with one or more chemical functions for interaction with the chemical species to be detected.

6. Film according to any one of Claims 1 to 5, in which the organic molecules grafted onto the said nanoparticles are bifunctional molecules comprising, firstly, at least one chemical function for attachment to the said nanoparticles and, secondly, at least one chemical function for bonding with the organic molecules for interaction of the film with the chemical species to be detected.

7. Film according to any one of Claims 1 to 5, in which the organic molecules forming an organic crown around the said nanoparticles comprise a molecule chosen from a set including a linear or branched alkyl containing from 1 to 12 carbon atoms, or an aryl substituted with one or more chemical function(s) for attachment to the said nanoparticles.

8. Film according to Claim 6 or 7, in which the at least one chemical function for attachment to the said nanoparticles is chosen from a set comprising a thiolate, an isonitrile, an amine, a trioctyl phosphate and a pyridine.

9. Film according to Claim 6, or according to Claim 8 when it is dependent on Claim 6, in which the at least one chemical function for bonding with the organic molecules for interaction of the film with the chemical species to be detected is chosen from a set comprising a pyridine, an amine function, a carboxylate function, an acid function, an alcohol function, an aldehyde function, an isocyanate function, an isothiocyanate function, an ester function and a -COCl function,

10. Film according to Claim 5 or 8 when it is dependent on Claim 6, or 9, in which the at least one chemical function for interaction with the chemical species to be detected is chosen from a set comprising an amine function, a carboxylate function, an acid function, an alcohol function, an aldehyde function, an isocyanate function, an isothiocyanate function and an ester function.

11. Film according to Claim 6, in which the bifunctional organic molecules comprise a molecule chosen from a set comprising a thiophenol, a linear or branched alkylthiol containing from 1 to 11 carbon atoms, and an arylthiol.

12. Film according to any one of Claims 1 to 4, in which the organic molecules grafted onto the said nanoparticles are chosen from a set comprising 4-mercaptoaniline, 4-mercaptopyridine, an N-aminoalkane thiol and a mercaptohydroxyalkane, or a mixture thereof.

13. Film according to Claim 1, in which the said nanoparticles are platinum nanoparticles, and in which 4-mercaptoaniline organic molecules are grafted onto the platinum nanoparticles.

14. Film according to Claim 13, in which thiophene or erythrosine organic molecules are grafted onto 4-mercaptoaniline molecules.

15. Film according to Claim 13, also comprising a tetrapyridinophthalocyanin.

16. Film according to any one of the preceding claims, in which the said nanoparticles alternate with the organic molecules so as to form a homogeneous mixture at the nanometric scale.

17. Process for manufacturing a chemical sensor comprising an insulating substrate, a film for detecting a chemical species, and at least one metal electrode, **characterized in that** it comprises a step of manufacturing a film according to any one of Claims 1 to 16, a step of depositing this film onto the insulating substrate, and a step of depositing the metal electrode(s) either onto the insulating substrate before deposition of the film, or onto the film after deposition thereof onto the insulating substrate.

18. Process according to Claim 17, in which the electrodes are deposited onto the insulating substrate before deposition of the film.

19. Process according to Claim 17 or 18, also comprising a step that consists in preparing, at the interface between the insulating substrate and the film and/or at the interface between the electrodes and the film, at least one intercalating monomolecular layer consisting of molecules comprising an organic group capable of improving the mechanical and/or electrical contact properties between the film and the metal electrodes and/or between the film and the substrate.

20. Process according to Claim 19, in which the molecules of the intercalating layer located at the interface between the substrate and the film, referred to as the first molecules, are different from the molecules of the intercalating layer located at the interface between the metal electrodes and the film, referred to as the second molecules.

21. Process according to Claim 20, in which the said first molecules are bonded to the insulating substrate via silicon atoms, and the second molecules are bonded to the electrodes via sulfur or nitrogen atoms.

22. Process according to any one of Claims 17 to 21, in which, since the deposition of the film is performed by vertical transfer, it is performed using a solution of the nanoparticles and of the organic molecules comprising one or more amphiphilic molecule(s).

23. Chemical sensor, **characterized in that** it comprises an insulating substrate, a film according to any one of Claims 1 to 16, and at least one measuring metal electrode.

24. Chemical sensor according to Claim 23, in which at least one measuring metal electrode is placed between the insulating substrate and the film.

25. Chemical sensor according to Claim 23 or 24, also comprising, at the interface between the substrate and the film, at least one intercalating monomolecular layer consisting of organic molecules covalently bonded to the substrate or to the electrodes, the said molecules comprising an organic group that improves the mechanical and/or electrical contact properties between the film of active material and the metal electrodes, and between the film of active material and the substrate.

26. Chemical sensor according to Claim 25, in which the organic group of the molecules of the intercalating layer is chosen from hydrophilic groups, hydrophobic groups and groups forming a chemical bond with the said film.

27. Chemical sensor according to Claim 25 or 26, in which the molecules of the intercalating layer that are located at the interface between the substrate and the film, referred to as the first molecules, are different from the molecules of the intercalating layer located at the interface between the electrodes and the said film, referred to as the second molecules.
